# EUROPEAN PATENT SPECIFICATION

(11) **EP 2 569 210 B1**
(45) Date of publication and mention of the grant of the patent: **30.09.2015**
(21) Application number: 11721359.5
(22) Date of filing: 27.04.2011
(51) Int. Cl.: B62D 21/15, B62D 25/04, B60R 19/18

(54) **Bumper for a vehicle**
Fahrzeugsstossfänger
Parechoc pour automobile

(30) Priority: 11.05.2010 JP 2010109487
(43) Date of publication of application: 20.03.2013
(73) Proprietor: TOYOTA JIDOSHA KABUSHIKI KAISHA, Toyota-shi, Aichi-ken, 471-8571 (JP)
(72) Inventor: MORI, Takeo, Toyota-shi Aichi-ken 471-8571 (JP)
(74) Representative: TBK
(86) International application number: PCT/IB2011/000898
(87) International publication number: WO 2011/141784

(56) References cited:
- EP-A1- 2 108 568
- EP-A2- 0 816 520
- JP-A- 2005 247 002
- US-A- 5 984 402
- US-A1- 2005 023 862
- US-A1- 2005 046 233

## Description

### BACKGROUND OF THE INVENTION

### 1. Field of the Invention

The invention relates to a vehicle body member.

### 2. Description of the Related Art

Vehicle body members are provided in such a way so as be capable of taking loads that are generated, for instance, on account of acceleration during travel of a vehicle. Vehicle body members in the related art include members that secure strength against stress derived from loads that occur during a collision of the vehicle, in order to keep to a minimum deformation of the vehicle body during the collision. For instance, in a center pillar structure disclosed in Japanese Patent Application Publication No. 2005-247002 (JP-A-2005-247002), a reinforcement member is provided, in a center pillar, at a site of large bending moment, to secure thereby the strength of a center pillar, and reduce deformation during a collision of the vehicle.

**Furthermore, a vehicle body according to the preamble of claim 1 is known from** EP 2 108 568 A**,** US 2005/0023862 A **and** US 2005/0046233 A**, respectively.**

### SUMMARY OF THE INVENTION

However, securing strength by providing a reinforcement member at a site where large stress occurs entailed an increase in weight, which was likely to result in poorer vehicle travel performance and worse fuel consumption. Also, securing strength by providing a reinforcement member was likely to incur higher manufacturing costs.

**It is the object of the present invention to** provide a vehicle body member in which strength can be enhanced without an increase in reinforcement members.

**According to the present invention, the above object is solved with a vehicle body member having the features of claim 1.**

The invention allows increasing the strength of a vehicle body member without an increase in reinforcement members.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1. is a schematic diagram of a vehicle provided with a center pillar according to **explanatory example 1;**
FIG. 2 is a perspective-view diagram of a frame member of the vehicle illustrated in FIG. 1;
FIG. 3 is perspective-view diagram of a center pillar;
FIG. 4 is an exploded perspective-view diagram of a center pillar;
FIG. 5 is an explanatory diagram of a curvature distribution of a center pillar;
FIG. 6 is a cross-sectional diagram illustrating an instance of input of a bending moment to a small-curvature member;
FIG. 7 is a cross-sectional diagram illustrating an instance of input of a bending moment to a large-curvature member;
FIG. 8. is.an explanatory diagram illustrating a relationship between member curvature and bending moment;
FIG. 9 is an explanatory diagram of a center pillar according to **explanatory example 2**;
FIG. 10 is a detailed diagram of portion X in FIG. 9;
FIG. 11 is a cross-sectional diagram along XI-XI in FIG. 10;
FIG. 12 is a cross-sectional diagram along XII-XII in FIG. 10;
FIG. 13 is a perspective-view diagram of an inner panel illustrated in FIG. 9 when viewed from a pillar reinforcement;
FIG. 14 is a plan-view diagram illustrating a bumper reinforcement according to Embodiment **1**;
FIG. 15 is a perspective-view diagram of the bumper reinforcement illustrated in FIG. 14;
FIG. 16 is a plan-view diagram illustrating a bumper reinforcement according to Embodiment **2**;
FIG. 17 is a perspective-view diagram of the bumper reinforcement illustrated in FIG. 16;
FIG. 18.is a plan-view diagram illustrating a rocker rail according to **explanatory example 5**;
FIG. 19 is a perspective-view diagram of an outer reinforcement of the rocker rail illustrated in FIG. 18;
FIG. 20 is a perspective-view diagram of a rocker inner of the rocker rail illustrated in

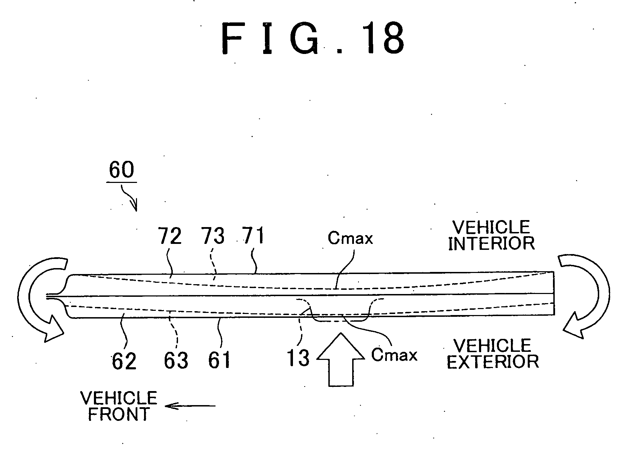

FIG. 18 viewed from an outer reinforcement;

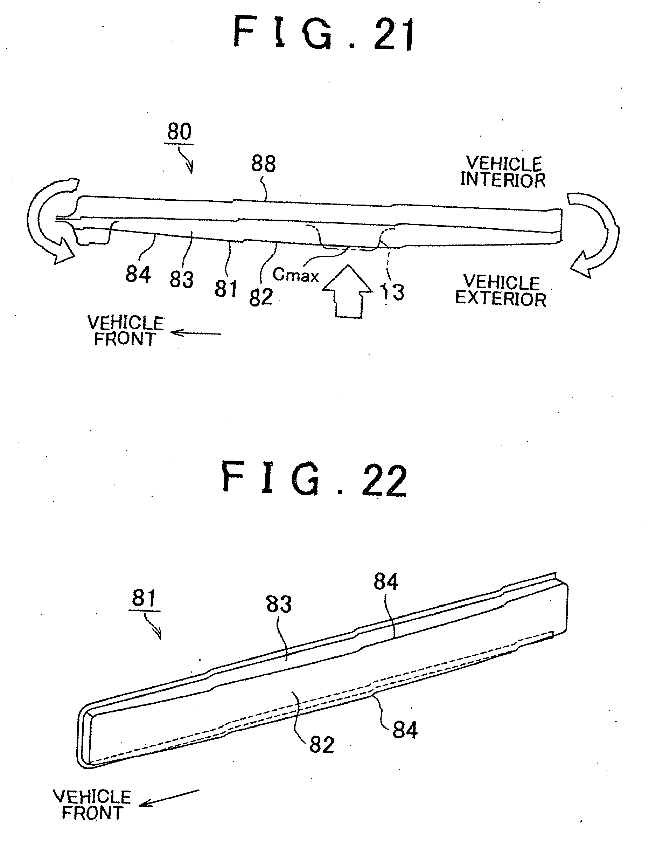

FIG. 21 is a plan-view diagram illustrating a rocker rail according to **explanatory example** 6;
FIG. 22 is a perspective-view diagram of an outer reinforcement of the rocker rail illustrated in FIG. 21;

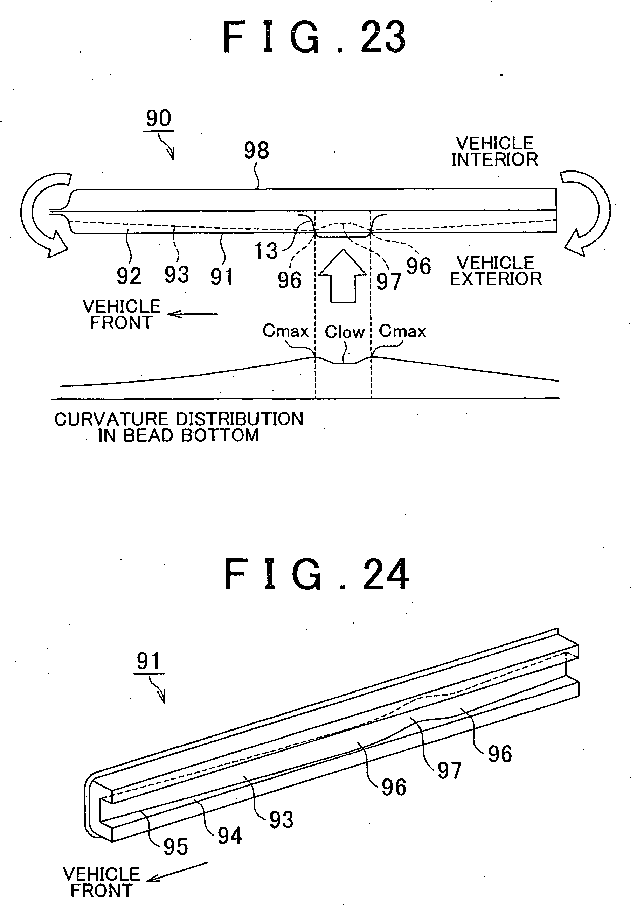

FIG. 23 is a plan-view diagram illustrating a rocker rail according to **explanatory example 7**;
FIG. 24 is a perspective-view diagram of an outer reinforcement of the rocker rail illustrated in FIG. 23;

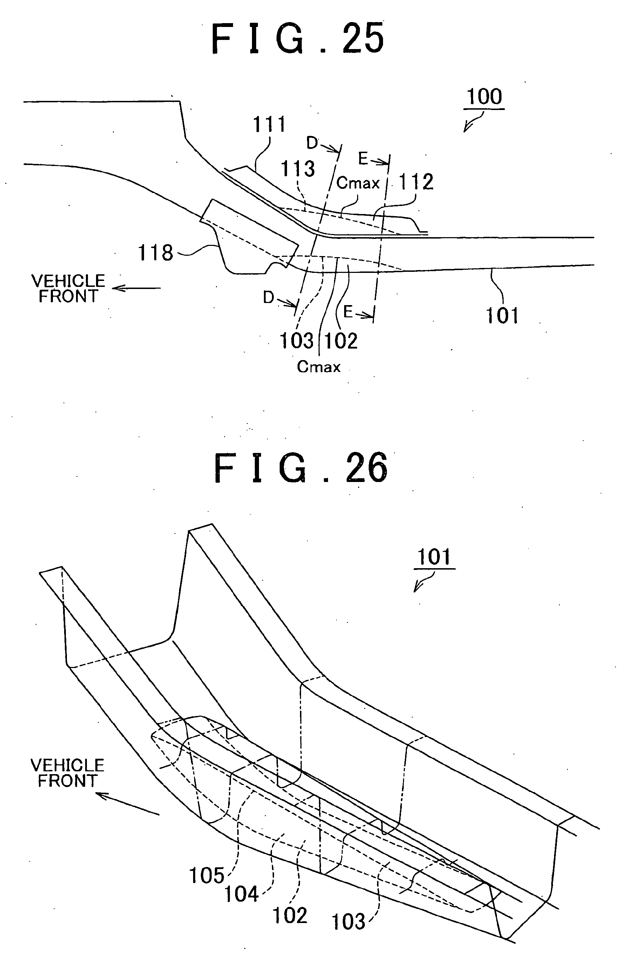

FIG. 25 is a side-view diagram illustrating a kick-up section according to **explanatory example 8**;
FIG 26 is a perspective-view diagram of a front side member provided in the kick-up section illustrated in FIG. 25;

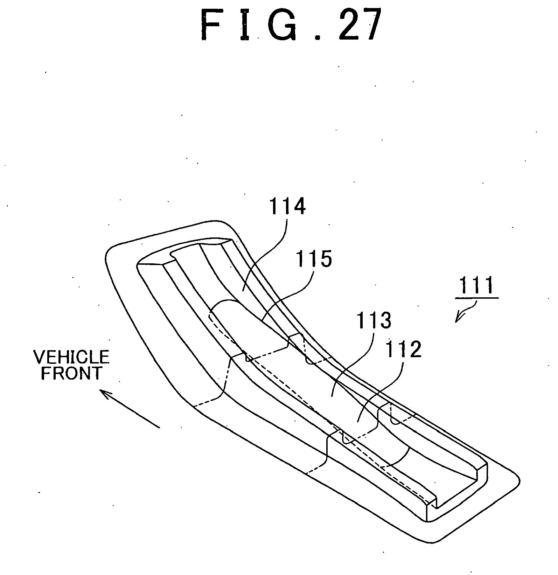

FIG. 27 is a perspective-view diagram of a kick-up reinforcement provided in the kick-up section illustrated in FIG. 25;

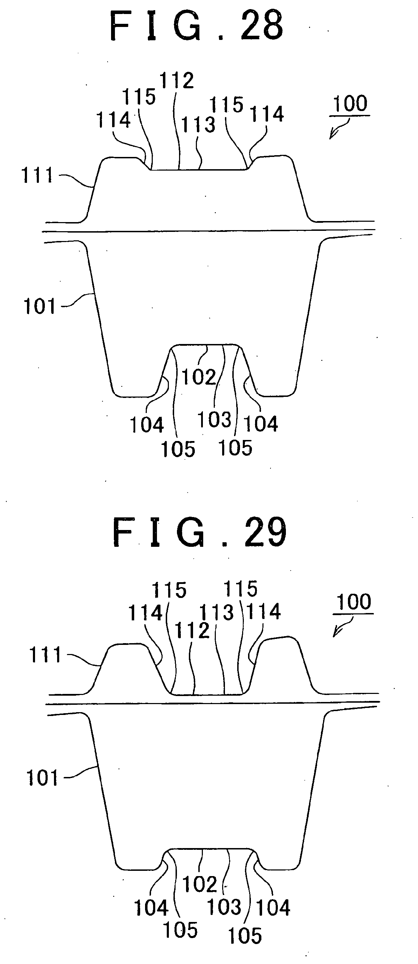

FIG. 28 is a cross-sectional diagram along XXVIII-XXVIII in FIG. 25;
FIG. 29 is a cross-sectional diagram along XXVIIII-XXVIIII in FIG. 25;

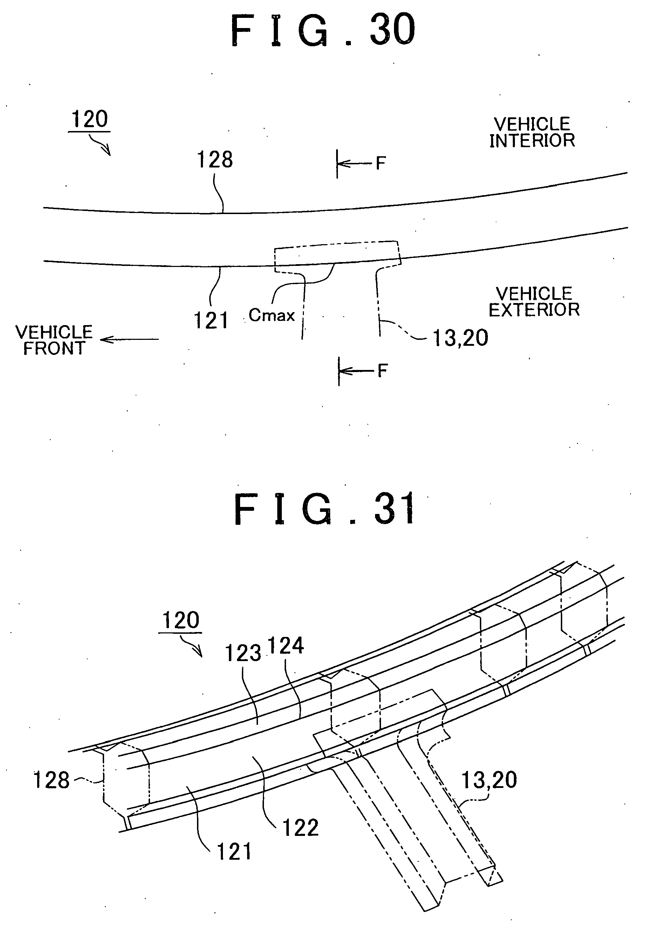

FIG. 30 is a plan-view diagram illustrating a roof rail according to **explanatory example** 9;
FIG. 31 is a perspective-view diagram of the roof rail illustrated in FIG..30; and

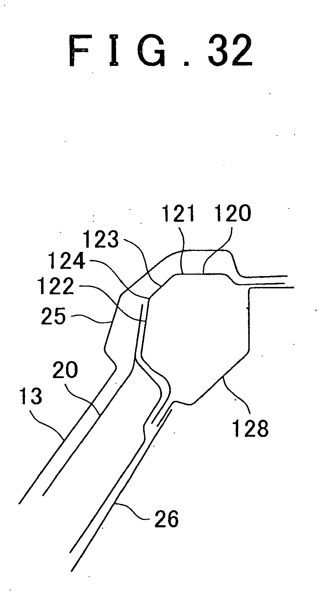

FIG. 32 is a cross-sectional diagram along XXXII-XXXII in FIG. 30.

### DETAILED DESCRIPTION OF EXPLANATORY EXAMPLES AND EMBODIMENTS

A vehicle body member according to **explanatory examples and** embodiments of the invention is explained in detail below on the basis of accompanying drawings. The invention, however, is not limited to the embodiments. The constituent elements in the below-described embodiments encompass also substitute elements and elements that a person skilled in the art could easily conceive of, as well as substantially identical elements.

### Explanatory Example 1

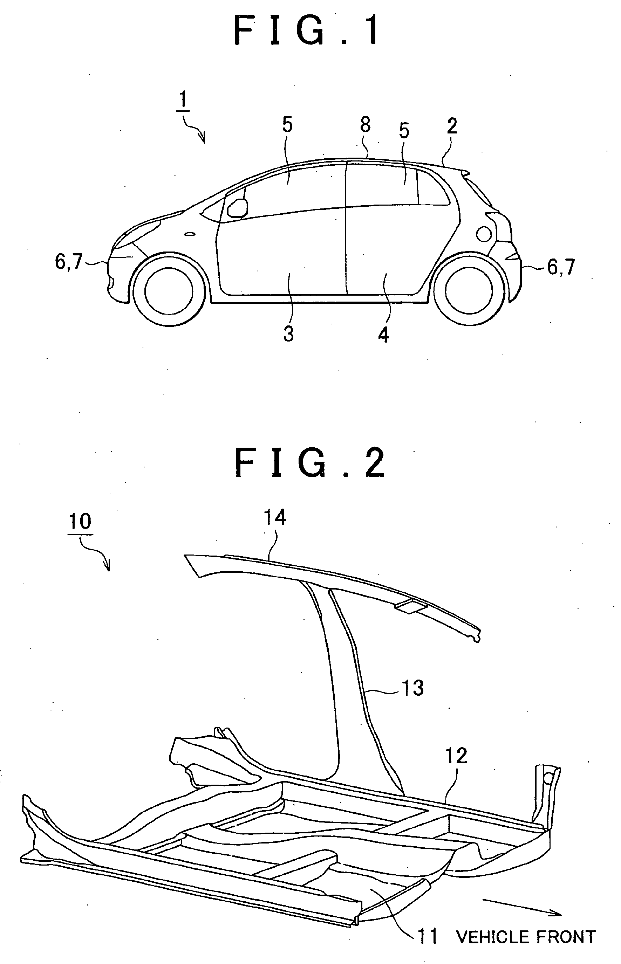

FIG. 1 is a schematic diagram of a vehicle provided with a center pillar according to **explanatory example 1.** FIG 2 is a perspective-view diagram of a frame member of the vehicle illustrated in FIG. 1. The vehicle 1 illustrated in FIG. 1 has a center pillar 13, which is **explanatory example 1** of the vehicle body member.

The vehicle 1 is made up of a body 2 having a frame member 10 that secures the strength of the body 2. The frame member 10, which is formed of a high-strength metal material, makes up a skeleton of the body 2. The frame member 10 thus provided has: a floor 11 positioned at the lower face side of the body 2; rocker rails 12 provided at both ends of the floor 11 in the width direction of the vehicle 1, and being members that extend in the front-rear direction of the vehicle 1; center pillars 13 that form some of the plurality of pillars of the vehicle 1, each center pillar 13 being joined to the vicinity of an intermediate section of each rocker rail 12 in the front-rear direction of the vehicle 1; and roof rails 14 joined to respective center pillars 13, at an end of the center pillar 13 on the side opposite to the end at which the center pillar 13 is joined to a rocker rail 12.

The center pillars 13 are disposed on both sides of the vehicle 1, in the width direction, like the rocker rails 12. The two center pillars 13 are respectively joined to the two rocker rails 12 disposed on both sides of the vehicle 1 in the width direction. The center pillars 13 extend toward the top of the vehicle 1 from the vicinity of the intermediate section of each rocker rail 12, in the front-rear direction of the vehicle 1. The roof rails 14 are disposed on both sides of the vehicle 1, in the width direction, like the rocker rails 12 and the center pillars 13. The two roof rails 14 are respectively joined to the two center pillars 13 that are disposed on both sides of the vehicle 1, in the width direction, in the vicinity of the intermediate section of the roof rails 14 in the front-rear direction of the vehicle 1.

The rocker rails 12, the center pillars 13 and the roof rails 14 of the frame member 10 are provided as described above, and hence each rocker rail 12 is disposed in the vicinity of the lower end of a front door 3 and/or a rear door 4 of the vehicle 1. Each roof rail 14 is positioned at both ends of the roof 8 in the width direction of the vehicle 1, extends in the front-rear direction of the vehicle 1, and is disposed in the vicinity of the top end of the front door 3 and/or the rear door 4. Each center pillar 13 is positioned between the front door 3 and the rear door 4, extends in the up-and-down direction of the vehicle 1, and is connected to a respective roof rail 14 and rocker rail 12. Specifically, each center pillar 13 is disposed in the vicinity of the front end of the rear door 4, such that a hinge (not shown) for opening and closing the rear door 4 is connected to the center pillar 13.

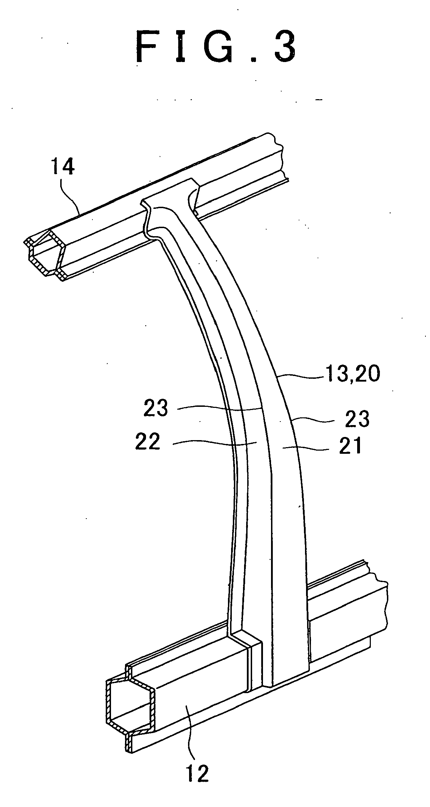

FIG. 3 is perspective-view diagram of one center pillar. The ends of the center pillar 13 are joined to the rocker rail 12 and the roof rail 14. Specifically, a pillar reinforcement 20, which is a reinforcement member of the center pillar 13, is joined to the rocker rail 12 and the roof rail 14. The cross-sectional shape of the pillar reinforcement 20, when viewed in the up-and-down direction of the vehicle 1, is substantially that of a hat whose opening side faces inward of the vehicle 1 in the width direction of the latter.

By contrast, the rocker rail 12 and the roof rail 14 to which the pillar reinforcement 20 is joined are formed to a pipe-like shape, having an inward hollow portion, as a result of combining a plurality of members. The pillar reinforcement 20 is locked to the rocker rail 12 and the roof rail 14 thus formed, in the width direction, from outside of the vehicle 1, in such a manner that the pillar reinforcement 20 covers part of the rocker rail 12 and the roof rail 14. The pillar reinforcement 20 is joined thereby to the rocker rail 12 and the roof rail 14.

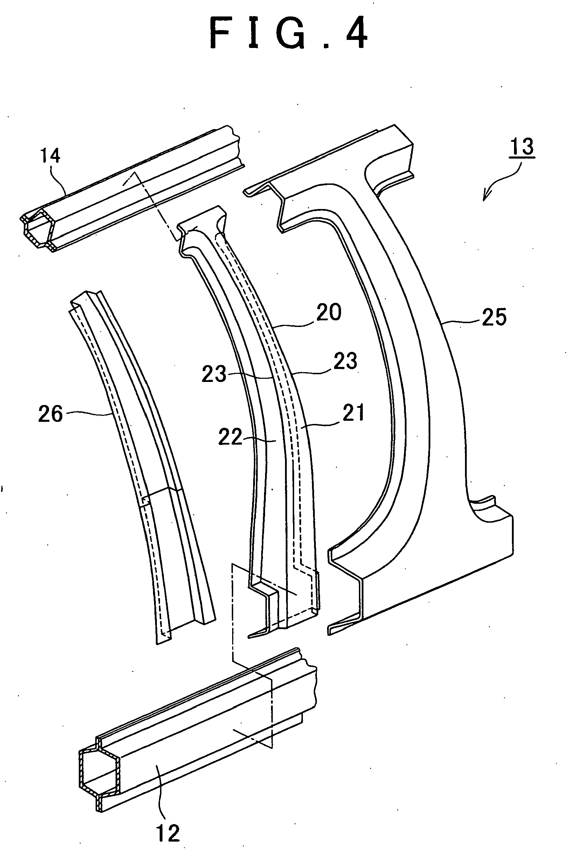

FIG. 4 is an exploded perspective-view diagram of the center pillar. The center pillar 13 further has an outer panel 25 and an inner panel 26. The outer panel 25 covers the center pillar 13, from outside the vehicle 1 in the width direction thereof, and covers part of the rocker rail 12 and the roof rail 14. The inner panel 26 is disposed inward of the center pillar 13 in the width direction of the vehicle 1, and plugs the opening portion of the substantially hat-shaped pillar reinforcement 20. Therefore, the pillar reinforcement 20 and the inner panel 26 cause the center pillar 13 to have a square pipe-like cross-sectional shape when viewed in the up-and-down direction of the vehicle 1.

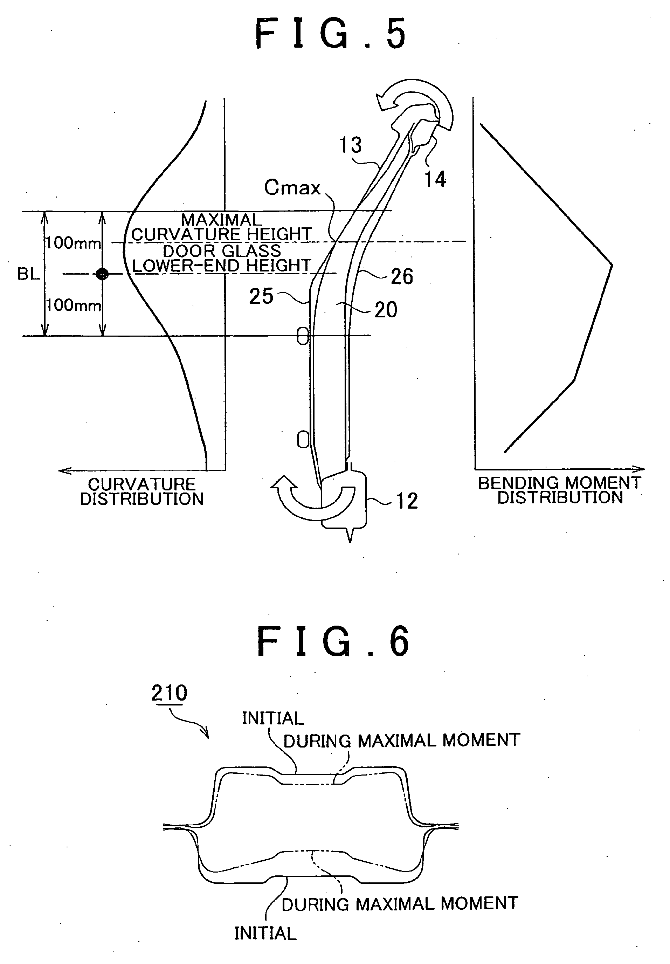

FIG. 5 is an explanatory diagram of a curvature distribution of the center pillar. The ends of the center pillar 13 are joined to the rocker rail 12 and the roof rail 14. In the center pillar 13 thus provided, the pillar reinforcement 20, the outer panel 25 and the inner panel 26 are all curvedly formed. The center pillar 13 is curved so as to bulge out in the width direction of the vehicle 1.

The curvature of the curvedly formed center pillar 13 varies depending on the position in the height direction of the vehicle 1. Specifically, the pillar reinforcement 20 curves in such a manner that the curvature thereof varies according to the position in the height direction of the vehicle 1. The outer panel 25 and the inner panel 26 are formed along the center pillar 13. In the pillar reinforcement 20, whose curvature varies according to the position in the height direction of the vehicle 1, a maximal curvature portion Cmax, being a portion at which curvature is maximal, is positioned within the area of a belt line BL.

Herein, the belt line BL refers to an area within 100 mm up and down from a door glass lower-end height, being the height, in the height.direction of the vehicle 1, of the lower end portion of a door glass 5 that is provided in the front door 3 and/or the rear door 4. Specifically, the belt line BL refers to an area within 100 mm up and down from the boundary, in the up-and-down direction, between a metal-sheet portion of the front door 3 and/or the rear door 4 and the lower end portion of the door glass 5, in a state where the door glass 5 is closed.

The curvature of the pillar reinforcement 20 may be greater at a portion above the lower end of a window frame, being a frame of the door glass 5 of the vehicle 1, than curvatures at other portions. Specifically, a maximal curvature portion of the outer panel 25 and the maximal curvature portion Cmax of the pillar reinforcement 20 may be offset from each other, so that the strength of the pillar reinforcement 20 is greater than the strength of the outer panel 25 and the maximal curvature portion Cmax of the pillar reinforcement 20 is positioned above the lower end portion of the door glass 5, within the area of the belt line BL, in a state where the door glass 5 is closed.

The pillar reinforcement 20 is curved bulging outward in the width direction of the vehicle 1, and the maximal curvature portion Cmax is positioned at the belt line BL, so that the curvature varies so as to decrease gradually away from the maximal curvature portion Cmax in the up-and-down direction of the vehicle 1.

In the pillar reinforcement 20, more specifically, the above-described curving is adopted at least by one portion at which the cross-sectional hat shape of the pillar reinforcement 20 bulges out, or by ridgelines 23, which are connection portions between a bottom wall 21, being a wall section of a portion positioned at a groove bottom when viewed from the side of the inner panel 26, and side walls 22 that are positioned on both sides of the bottom wall 21 and that intersect the bottom wall 21, in a cross-sectional view. In the pillar reinforcement 20, thus, at least the ridgelines 23 that extend in the longitudinal direction of the center pillar 13, through formation of the bottom wall 21 and the side walls 22, are curved bulging outward in the width direction of the vehicle 1, and the maximal curvature portion Cmax is positioned at the belt line BL, so that the curvature varies decreasing gradually away from the maximal curvature portion Cmax in the up-and-down direction of the vehicle. 1.

The curvature of the pillar reinforcement 20 thus formed varies continuously, so that the curve pillar reinforcement 20 exhibits no distinctive breaks when the pillar reinforcement 20 is viewed from the front-rear direction of the vehicle 1.

The outer panel 25 and the inner panel 26 are formed along the pillar reinforcement 20 thus curved. Similarly to the pillar reinforcement 20, the outer panel 25 and the inner panel 26 are curved bulging outward in the width direction of the vehicle 1.

The effect of the center pillar 13 according to Embodiment 1, having the aforementioned configuration, is explained next. The stiffness of the body 2 in the vehicle 1 having the center pillar 13 according to Embodiment 1 is secured mainly by way of the frame member 10. Most of the loads generated upon acceleration or the like during travel of the vehicle 1 act on the frame member 10.

For instance, the rocker rails 12 that extend in the front-rear direction of the vehicle 1, and that are positioned at both ends of the floor 11 in the width direction of the vehicle 1, secure the strength of the floor 11 and suppress twist of the floor 11 as well as deflection of the floor 11 in the front-rear direction. The roof rails 14, extending in the front-rear direction of the vehicle 1 and positioned at both ends of the roof 8 in the width direction of the vehicle 1, secure the strength of the roof 8 and suppress twist of the roof 8 as well as deflection of the roof 8 in the front-rear direction. The center pillars 13 that extend in the up-and-down direction of the vehicle 1 and are joined to the rocker rails 12 and the roof rails 14, thus connecting the rocker rails 12 and the roof rails 14, connect as a result the roof 8 with the floor 11. The stiffness of the body 2 as a whole is enhanced thereby. As a result, deformation of the body 2, i.e. deflection and so forth, caused by loads generated during travel of the vehicle 1 is kept to a minimum, and stability during travel is secured.

The loads generated during travel of the vehicle 1 act mainly on the frame member 10 having thus strength, but the vehicle 1 may be subjected to loads other than loads that act on the body 2 during ordinary travel. For instance, the vehicle 1 may collide with another vehicle or the like that hits a side face of the host vehicle when the vehicle 1 is stopped. When another vehicle or the like hits the vicinity of the center pillar 13 upon occurrence of such a side collision, the body 2 is acted upon by a load derived from the energy of the collision, such that the collision load acts on the center pillar 13 as well. The load during a collision is often greater than loads during ordinary travel of the vehicle 1, and thus the center pillar 13 is subjected to a substantial load.

The load acting on the center pillar 13 during such a collision is explained next. During a collision, the center pillar 13 on the side against which the other vehicle or the like hits is acted upon by a large load, from outside the vehicle 1 toward the interior of the latter. The ends of the center pillar 13 are connected to the rocker rail 12 and the roof rail 14, and hence the load during a collision acts in a state where both ends are fixed. A bending moment is inputted as a result to the center pillar 13. In a side collision, specifically, a load is inputted to the center pillar 13, in a direction intersecting the bottom wall 21 of the pillar reinforcement 20, in the vicinity of the center of the length direction, with both ends in a fixed state. As a result, input of the load gives rise to a bending moment (arrows in FIG. 5) of pushing and bending both ends in a direction opposite to the input direction of the load that is inputted to the center pillar 13.

The longer the moment arm, the greater the bending moment is. Therefore, the bending moment that is generated on account of the force that pushes and bends both ends as described above increases from the ends toward the middle, in the length direction. As a result, the bending moment that is generated on account of the load acting on the center pillar 13 during a side collision and that is inputted to the center pillar 13 increases from the ends toward the middle, in the length direction (see FIG. 5, bending moment distribution diagram). That is, a large bending moment acts on the center pillar 13, at the belt line BL, during a side collision.

The maximal curvature portion Cmax of the pillar reinforcement 20 of the center pillar 13 is positioned at the belt line BL. That is, the curvature of the ridgelines 23 corresponding to portions at which bending moment is maximal in the pillar reinforcement 20 on account of the load acting on the body 2, is greater than curvatures of the ridgelines 23 corresponding to other portions. As a result, the center pillar 13 has substantial strength at the belt line BL, and hence, during a side collision, the bending moment caused by a large load during the side collision can be taken by the center pillar 13, wherein the strength of the belt line BL is thus increased.

FIG. 6 is a cross-sectional diagram illustrating an instance of input of bending moment to a member having a small curvature. An explanation follows next on the strength for each member curvature when a bending moment is inputted to the member. Firstly, in a case where a member 210, the cross-sectional shape whereof is a square pipe-like shape, has a small curvature or is formed as a straight line, a force acting in a direction such that the member 210 bends causes a portion in the cross-sectional shape of the member 210, the portion being formed in a direction perpendicular to the direction of bending, to deform in a direction of sinking in the direction of bending. When a bending force is inputted to the member 210, a tensile force acts on the face positioned outward in the direction of bending, and a compression force acts on a face positioned inward in the direction of bending. If the curvature of the member 210 is small, the face acted upon by the tensile force and the face acted upon by the compressive force deform both so as to sink toward the interior of the member 210.

As a result, the cross-sectional shape at a time where a maximal bending moment is generated, on account of the inputted bending force, deforms so as to collapse in the direction of bending vis-à-vis the initial shape in which no bending force is inputted, as illustrated in FIG. 6. Therefore, in a case where a bending moment is inputted to a member 210 having a small curvature or that is shaped along a straight line, the cross-sectional shape deforms in such a manner that the section modulus decreases.

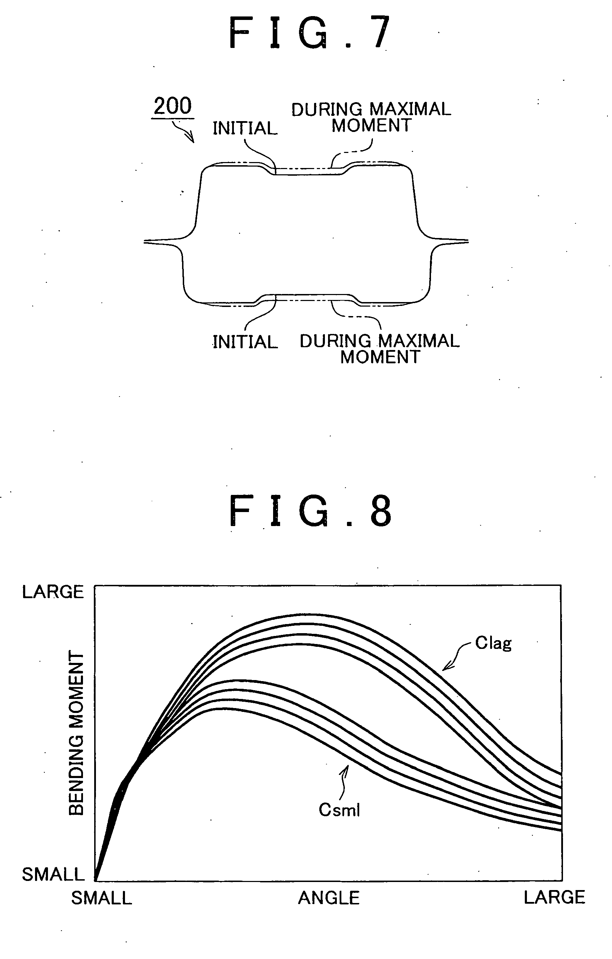

FIG. 7 is a cross-sectional diagram illustrating an instance of input of a bending moment to a large-curvature member. In the case of a member 200 having a cross-sectional shape identical to that of the member 210 but being formed curved to a large curvature, by contrast, a force acting on the member 200 in a direction of bending the member, in the opposite direction to the direction in which the member curves, i.e. a direction in which curvature decreases, causes a portion in the cross-sectional shape of the member 200, the portion being formed in a direction perpendicular to the direction of bending, to deform so as to expand in the direction of bending. That is, when a bending force is inputted to the member 200, which is curved with a large curvature, in a direction such that the curvature decreases, the face positioned outward of the curve and acted upon by a compressive force deforms so as to expand outward of the member 200. The face positioned inward of the curve and acted upon by a tensile force is stretched at the curving portion, and hence the face deforms as well in a direction of expanding outward of the member 200.

As a result, the cross-sectional shape at a time where the maximal bending moment is generated on account of the inputted bending force deforms so as to expand in the direction of bending, vis-à-vis the initial shape in which no bending force is inputted, as illustrated in FIG. 7. Therefore, when a bending moment is inputted to the member 200 that is formed curved to a large curvature, in an opposite direction to the direction in which curvature is imparted, i.e. in a case where a bending moment is inputted in a direction such that the compression side of bending is the direction at which the curve bulges, the cross-sectional shape deforms in such a manner that the section modulus decreases.

FIG. 8 is an Explanatory diagram illustrating a relationship between member curvature and bending moment. When a force acts in a direction of causing the member to bend, the way in which the cross-sectional shape of the member deforms, and the way in which the section modulus changes, vary both depending on the curvature of the member. Accordingly, the strength of the member when a bending moment is inputted thereto varies depending on the curvature of the member. In a more detailed explanation, the member undergoes so-called buckling, in that the member deforms suddenly when a bending moment is inputted to the member, if the bending moment, the magnitude of which is different depending on the member and shape of the member, exceeds the strength of the member. In buckling, the cross-sectional shape changes in such a manner that the cross section collapses and the section modulus decreases when a bending moment is inputted, in a case where the member has a small curvature or is formed along a straight line. In this case, elastic buckling occurs as a result, in that the member buckles at the elastic region.

When a bending moment is inputted to a large-curvature member in a direction that is opposite to the direction in which curvature is imparted, by contrast, the cross-sectional shape changes in such a manner that the cross section expands and the section modulus increases. As a result, the member can take the bending moment, without buckling in the elastic region. The member buckles if the bending moment grows to a magnitude corresponding to the buckling region of the member. Thus, in a case where a bending moment is inputted to a large-curvature member in a direction that is opposite to the direction in which curvature is imparted, the member can take a bending moment up to the magnitude of the plastic region, in which stress greater than that of the elastic region can be generated in the member. The member buckles then by plastic buckling, i.e. buckling at the plastic region.

A large-curvature member buckles thus through plastic buckling. Therefore, the bending moment at which buckling occurs is greater than in the case of a small-curvature member, which buckles by elastic buckling. Accordingly, a large-curvature member Clag has a greater maximal bending moment that the member can take without buckling as compared with a small-curvature member Csml, as illustrated in FIG. 8.

FIG. 8 illustrates a situation in which a bending moment is inputted to a member in a state where no forces are applied thereto, and the bending angle of the member increases as the inputted bending moment increases, and a situation where, from buckling of the member onward, the bending angle of the member increases while the bending moment that the member can take decreases. In the curves illustrated in FIG. 8, the portion at which the bending moment is largest is the maximal bending moment that the respective member can take. The member buckles thus if a bending moment equal to or greater than the maximal bending moment is inputted to the member.

As illustrated in FIG. 8, a large-curvature member Clag can take a larger bending moment, and exhibits higher strength upon input of a bending moment, as compared with a small-curvature member Csml. That is, a large-curvature member Clag buckles at the plastic region where stress is greater than in the elastic region. Therefore, the effective stress upon buckling, and the buckling strength, are greater than those in a small-curvature member Csml, and hence the large-curvature member Clag can take a larger bending moment, without buckling, as compared with the small-curvature member Csml.

A large-curvature member can thus take a large bending moment. Herein, the maximal curvature portion Cmax of the pillar reinforcement 20 in the center pillar 13 is positioned at the belt line BL. A large bending moment acts thus on the center pillar 13, at the belt line BL, during a side collision. Specifically, the maximal curvature portion Cmax of the pillar reinforcement 20 in the center pillar 13 is positioned at the belt line BL, were a large bending moment is likely to be generated during a side collision. The buckling strength of the belt line BL is thus increased. During a side collision, therefore, the pillar reinforcement 20 can take a large bending moment, in a state where the occurrence of buckling is unlikely, when a bending moment is inputted to the center pillar 13 through input, to the center pillar 13, of a load derived from the side collision.

In each ridgeline 23 of the pillar reinforcement 20 that extend in the longitudinal direction of the center pillar 13, the curvature of the ridgelines 23 corresponding to portions at which bending moment is maximal is greater than curvatures of the ridgelines 23 corresponding to other portions. Therefore, providing the curvature allows increasing the buckling strength of the center pillar 13 and allows increasing, more reliably, the strength of portions at which bending moment is maximal and that accordingly require substantial strength. Thus, desired strength toward inputted loads can be secured by simply imparting curvature by causing the pillar reinforcement 20 to be curved, without providing any new reinforcement member in the center pillar 13. The strength of the center pillar 13 can be enhanced as a result without an increase in reinforcement members.

The center pillar 13 has the outer panel 25 and the pillar reinforcement 20. The portion at which the curvature of the ridgelines 23 of the pillar reinforcement 20 is maximal corresponds to the portion at which the bending moment is maximal. As a result, strength toward bending moment can be ensured by way of the pillar reinforcement 20 alone, so that the outer panel 25 can be shaped according to the external-appearance design. Therefore, desired strength toward inputted loads can be secured while designing the external appearance of the vehicle 1 as desired. The strength of the center pillar 13 can thus be enhanced without affecting the external appearance of the vehicle 1.

The strength of the center pillar 13 to which a large load is inputted during a side collision can increased more reliably, since the maximal-curvature portion of the ridgelines 23 of the pillar reinforcement 20 that extends in the longitudinal direction of the center pillar 13 corresponds to the portion at which the bending moment of the center pillar 13 is maximal. As a result, the strength of the center pillar 13 toward inputted loads during a side collision of the vehicle 1 can be enhanced without an increase in reinforcement members.

The curvature of the pillar reinforcement 20 changes in such a manner that the curvature decreases gradually away from the maximal curvature portion Cmax, as a result of which strength can be increased effectively at a desired position. That is, the pillar reinforcement 20 is disposed between the outer panel 25 and the inner panel 26, and hence the thickness of the pillar reinforcement 20 in the width direction of the vehicle 1 is constrained. Therefore, in order to increase the curvature difference of the pillar reinforcement 20 within these constraints, the maximal curvature portion Cmax is positioned at the belt line BL, and the curvature is caused to decrease away from the maximal curvature portion Cmax, as a result of which the curvature difference can be increased at each position in the pillar reinforcement 20. The strength at a desired position in the pillar reinforcement 20 can be increased more reliably thereby vis-à-vis that in other positions. The strength of the center pillar 13 can be enhanced as a result without an increase in reinforcement members.

Desired strength toward inputted loads can be secured, while preserving a desired design, also in a case where the curvature of the portion of the pillar reinforcement 20 above the lower end of the window frame is greater than curvatures at other portions, even if the maximal curvature portion of the outer panel 25 is positioned at the lower end of the window frame for reasons of design of the vehicle 1. As a result, the strength of the center pillar 13 can be enhanced without affecting the external appearance of the vehicle 1.

### Explanatory Example 2

A center pillar 30 according to **explanatory example 2** has substantially the same configuration as the center pillar 13 according to **explanatory example 1**, but the characterizing feature of **explanatory example 2** is that now there is provided a curved section 37 in the opposite direction to the curving direction of the pillar reinforcement 20. Other features are identical to those of **explanatory example** 1. Accordingly, the same reference numerals will be used, and a recurrent explanation of the identical features will be omitted.

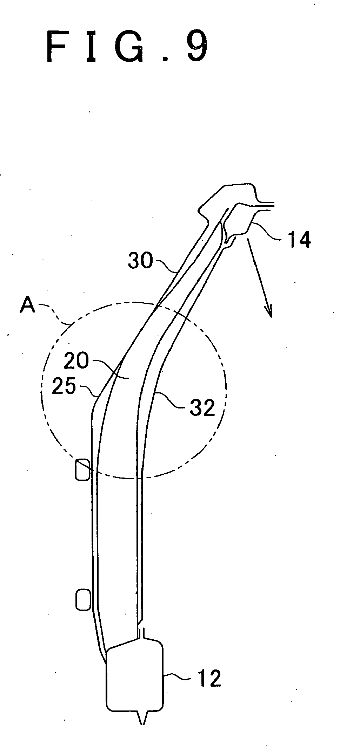

FIG. 9 is an explanatory diagram of a center pillar according to **explanatory example 2.** The center pillar 30, which is **explanatory example** 2 of the vehicle body member, has the pillar reinforcement 20 whose ends are joined to the rocker rail 12 and the roof rail 14, like the center pillar 13 according to **explanatory example** 1. The center pillar 30 has the outer panel 25 disposed so as to cover the pillar reinforcement 20 from outside the vehicle 1, in the width direction of the latter, and an inner panel 32 that is disposed inward of the pillar reinforcement 20 in the width direction of the vehicle 1. The pillar reinforcement 20 is curved bulging outward in the width direction of the vehicle 1, such that a maximal curvature portion Cmax thereof is positioned within the area of the belt line BL (FIG. 5).

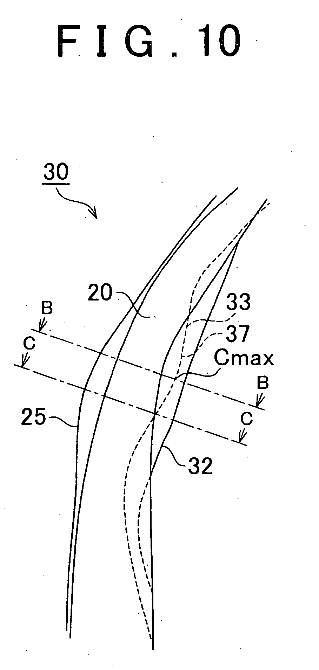

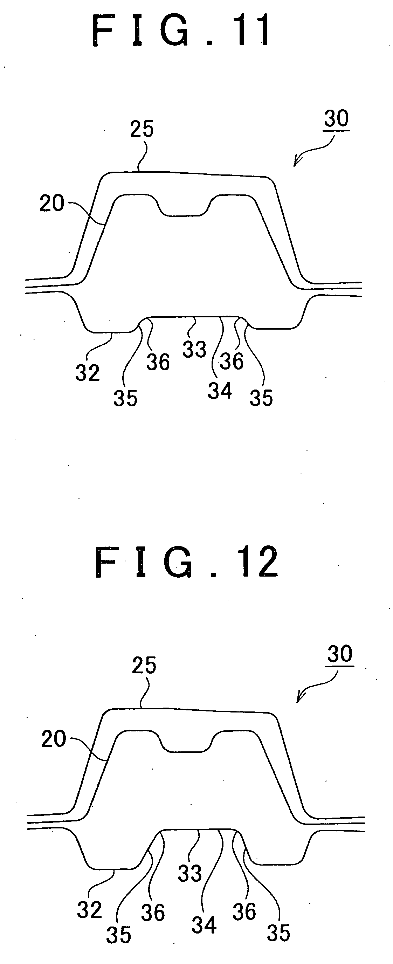

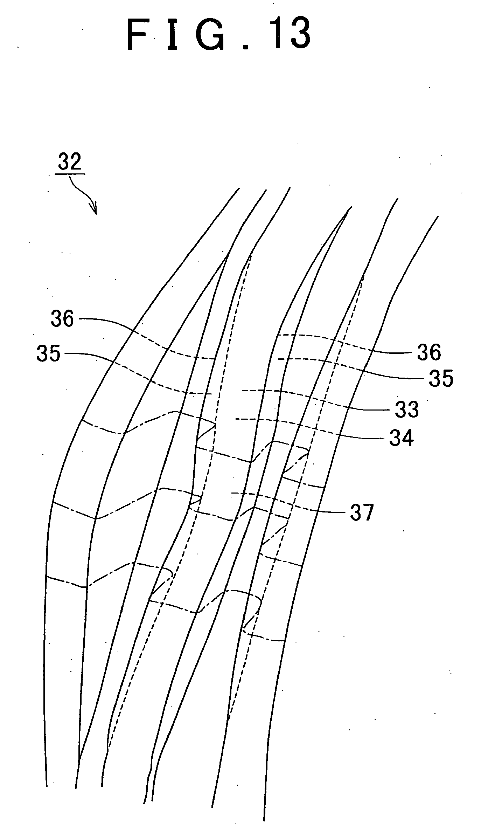

FIG. 10 is a detailed diagram of portion X in FIG. 9. FIG. 11 is a cross-sectional diagram along XI-XI in FIG. 10, FIG. 12 is a cross-sectional diagram along XII-XII in FIG. 10. FIG. 13 is a perspective-view diagram of the inner panel illustrated in FIG. 9. when viewed from the pillar reinforcement. The inner panel 32 has a groove section 33 having a portion that curves bulging inward in the width direction of the vehicle 1 contrary to the pillar reinforcement 20 that curves bulging outward in the width direction of the vehicle 1. More specifically, the groove section 33 is formed, in the inner panel 32, extending in the longitudinal direction of the inner panel 32, to a shape that sinks toward the side on which the pillar reinforcement 20 is positioned, as viewed from inside the vehicle 1, i.e. sinks outward of the vehicle 1.

The inner panel 32 is shaped for the most part following the pillar reinforcement 20, and hence is curved bulging outward in the width direction of the vehicle 1. Likewise, the groove section 33 is mostly curved bulging outward in the width direction of the vehicle 1, but part of the groove section 33 is curved bulging inward in the width direction of the vehicle 1.

In the groove section 33, specifically, a groove bottom 34 that extends in the longitudinal direction of the inner panel 32, while curving bulging outward in the width direction of the vehicle 1, has a portion that curves bulging inward in the width direction of the vehicle 1. This portion of the groove section 33 constitutes a curved section 37. The groove section 33 of the inner panel 32 has thus the curved section 37. As in the case of the pillar reinforcement 20, the curved section 37 of the groove section 33 has a maximal curvature portion Cmax, being a portion at which curvature is maximal, positioned within the area of belt line BL.

In the groove section 33, specifically, ridgelines 36 that are connection portions between the groove bottom 34 of the groove section 33 and groove walls 35 that intersect the groove bottom 34, extend in the longitudinal direction of the center pillar 30, such that, at the portion of the curved section 37, the ridgelines 36 are curved bulging inward in the width direction of the vehicle 1, and the maximal curvature portion Cmax of the curving ridgelines 36 is positioned within the area of the belt line BL.

The effect of the center pillar 30 according to Embodiment 2, having the aforementioned configuration, is explained next. When a side collision occurs in the vehicle 1, strength against the load inputted during the side collision is imparted to the center pillar 30 thanks to the center pillar 30 being curved bulging outward in the width direction of the vehicle 1 and thanks to the maximal curvature portion Cmax being positioned within the belt line BL.

There are cases where, during rollover of the vehicle 1 on account of, for instance, collision against another vehicle, the load derived from the rollover acts on the roof rail 14, and is inputted thereupon to center pillar 30 from the roof rail 14. In such cases, the direction of the load inputted to the center pillar 30 is different from the direction of the load that is inputted to the center pillar 30 during a side collision. The end of the center pillar 30 on the side of the roof rail 14 is urged inward, in the width direction of the vehicle 1, and downward of the vehicle 1 (see arrow in FIG. 9). During rollover of the vehicle 1, specifically, the direction of the load inputted to the center pillar 30 is a direction such that the curvature of the curving center pillar 30 increases.

During rollover of the vehicle 1, a load is inputted thus to the center pillar 30 in a direction such that the curvature of the center pillar 30 increases. However, the curved section 37 that curves bulging inward in the width direction of the vehicle 1 is formed at the groove section 33 that is formed on the inner panel 32 of the center pillar 30. In the curved section 37, as a result, the compression side of bending elicited by the load in the direction such that the curvature of the center pillar 30 increases is urged in the bowing direction of the curve. In a case where a load is inputted in the direction such that the curvature of the center pillar 30 increases, specifically, the load is inputted to the inner panel 32 as a load in a direction that intersects the groove bottom 34 of the groove section 33, and is inputted as a load in a direction such that the curvature of the curved section 37 decreases, with the bowing side of the curve of the curved section 37 as the compression side.

Therefore, in a case where a load is inputted to the center pillar 30 in a direction such that the curvature of the center pillar 30 increases, the inner panel 32 deforms so as to move away from the pillar reinforcement 20, at the portion of the inner panel 32 at which the curved section 37 is positioned. As a result, the cross-sectional shape of the center pillar 30 deforms in such a manner that the section modulus increases, at a portion at which the curved section 37 is positioned in this case. The buckling strength is increased thereby. During rollover of the vehicle 1, as a result, the inner panel 32 can take the aforementioned bending moment, in a state where the occurrence of buckling is unlikely, when a bending moment is inputted of the center pillar 30 through input, to the center pillar 30, of a load derived from rollover.

During rollover of the vehicle 1, thus, a bending moment is inputted to the center pillar 30 due to the load inputted on account of rollover. The maximal bending moment in this case is positioned within the belt line BL, as in the case of the bending moment during a side collision. Thus, a maximal curvature portion Cmax of the curved section 37 of the groove section 33 formed in the inner panel 32 is positioned within the belt line BL. As a result, this allows appropriately increasing the strength against the bending moment that is inputted to the center pillar 30 during rollover of the vehicle 1, and allows the inner panel 32 to take the bending moment, in a state where buckling is yet unlikelier to occur.

The groove section 33 having the curved section 37 that curves bulging inward in the width direction of the vehicle 1 is formed in the inner panel 32 of the center pillar 30. This allows, as a result, enhancing the buckling strength in a case where a bending moment is inputted to the center pillar 30 in a direction such that the curvature of the curved section 37 decreases. The strength of the center pillar 30 can be enhanced as a result without an increase in reinforcement members.

The pillar reinforcement 20 of the center pillar 30 is curved bulging outward in the width direction of the vehicle 1, while the curved section 37 of the inner panel 32 is curved bulging inward in the width direction of the vehicle 1. This allows, as a result, enhancing the buckling strength against both a bending moment acting on an end of the center pillar 30, in a direction of bending outward of the vehicle 1, in the width direction thereof, as well as a bending moment acting on an end of the center pillar 30, in a direction of bending inward of vehicle 1, in the width direction thereof. As a result, the strength of the center pillar 30 can be enhanced more reliably, regardless of the input direction of the load.

### Embodiment 1

In Embodiment 1 of the vehicle body member according to the invention, a bumper reinforcement 40 provided in the vehicle 1, and different from the center, pillar 13 according to **explanatory example** 1 constitutes Embodiment 1 of the vehicle body member according to the invention. Other features of the vehicle 1 having the bumper reinforcement 40 are identical to those of **explanatory example** 1. Accordingly, the same reference numerals will be used, and a recurrent explanation of the identical features will be omitted.

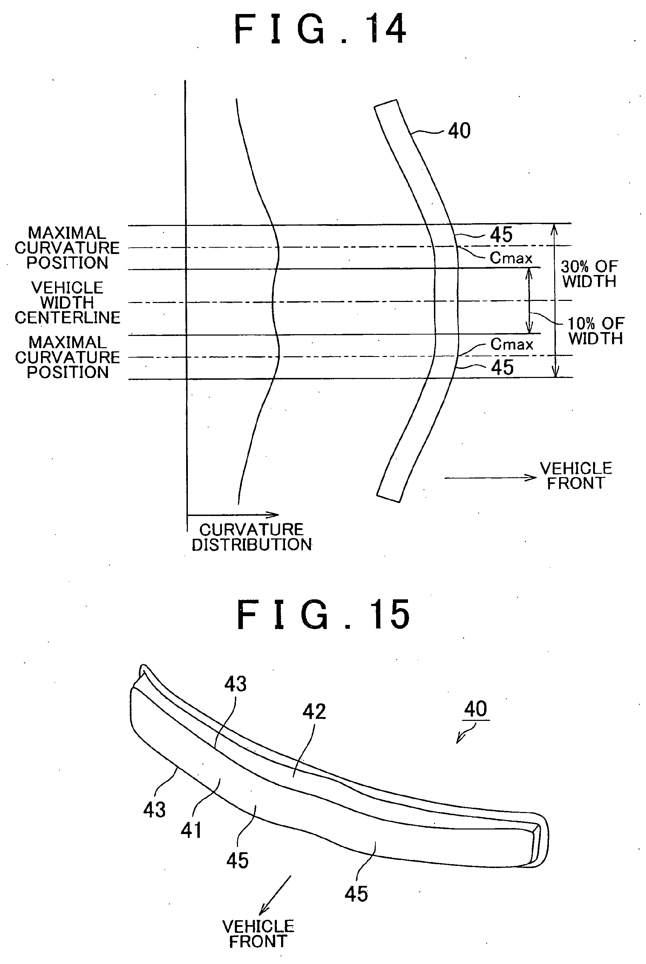

FIG. 14 is a plan-view diagram illustrating a bumper reinforcement according to Embodiment **1**. FIG. 15 is a perspective-view diagram of the bumper reinforcement illustrated in FIG. 14. The bumper reinforcement 40, which is Embodiment 1 of the vehicle body member according to the invention, is provided at bumpers 6 (see FIG. 1) that are positioned at the front end and rear end of the vehicle 1. More specifically, the bumper reinforcement 40 is disposed inward of each outer panel 7 that constitutes the outer shape of.each bumper 6 (see FIG. 1), and is provided as a member for securing the strength of the bumper 6. The bumper reinforcement 40 is thus provided in the bumper 6 that is positioned at the front end, and in the bumper 6 that is positioned at the rear end. The explanation below will deal with the bumper reinforcement 40 provided in the bumper 6 that is positioned at the front end.

The bumper reinforcement 40 thus provided has, when fitted to the vehicle 1, a vertical face 41 formed in the vertical direction and positioned at the front end or the rear end, and horizontal faces 42, positioned at the top and bottom of the vertical face 41 while connected to the vertical face 41, and formed in a horizontal direction, i.e. a direction that intersects the vertical face 41. The outer panel 7 of the bumper 6 is formed so as to cover the bumper reinforcement 40.

The bumper reinforcement 40, which is roughly formed so as to curve bulging frontward of the vehicle 1, has two curved sections 45 that are portions of large curvature. The two curved sections 45 are positioned at portions symmetrical with respect to a vehicle width centerline that is the center of the vehicle 1 in the width direction, i.e. are positioned at bilaterally symmetrical portions.

The curved sections 45 thus formed at two bilaterally symmetrical sites have each a maximal curvature portion Cmax being a portion at which curvature is maximal. Accordingly, the bumper reinforcement 40 has two maximal curvature portions Cmax. Like the curved sections 45, the two maximal curvature portions Cmax are positioned at portions symmetrical with respect to a vehicle width centerline that is the center of the vehicle 1 in the width direction, i.e. are positioned at bilaterally symmetrical portions.

The maximal curvature portions Cmax positioned thus at two bilaterally symmetrical sites are both positioned within a predetermined area, specifically, are positioned within an area ranging from 10% to 30% of the vehicle width, centered around the vehicle width centerline. In other words, the two maximal curvature portions Cmax are positioned at portions within an area such that the distance from the vehicle width centerline ranges from 5% to 15% of the vehicle width. The curvature of the bumper reinforcement 40 that curves bulging frontward of the vehicle 1 varies continuously so as to decrease gradually away from the two maximal curvature portions Cmax that are positioned within the above area (see the curvature distribution diagram in FIG. 14).

Ridgelines 43 of the bumper reinforcement 40, being connection portions between the vertical face 41 and the horizontal faces 42, extend in the longitudinal direction of the bumper 6, such that in each ridgeline 43 as well, a maximal curvature portion Cmax, being a portion at which curvature is maximal, is positioned at two sites spaced from the center of the vehicle 1 in the width direction.

An explanation follows next on the effect of the bumper reinforcement 40 according to Embodiment **1** having the above-described configuration. The bumper 6 is provided in order to reduce the impact during a collision in a case where the front or rear of the vehicle 1 collides, for instance, against another vehicle, or another vehicle or the like collides against the front or rear of the vehicle 1. The impact is likely to be substantial, however, in a case where another vehicle or the like collides against not the entire bumper 6, but just part thereof. In a case of, for instance, an offset collision, which is a frontal collision in a state where the centers of the vehicles are offset from each other, a large load derived from the collision acts on the bumper 6 positioned on the collision side of the vehicle 1 in the width direction.

When a large load is inputted thus to the bumper 6 on account of an offset collision, the load is inputted also to the bumper reinforcement 40. In this case, the direction of the load inputted to the bumper reinforcement 40 is such that the load pushes backward the curved sections 45 that curve bulging frontward. As a result, this load causes a bending moment to be inputted to the bumper reinforcement 40 in a direction such that the curvature of the curved sections 45 decreases. That is, when a large load is inputted to the bumper 6 on account of an offset collision, a load is inputted to the bumper reinforcement 40 as a load in a direction that intersects the vertical face 41, and is inputted as a load in a direction such that the curvature of the curved sections 45 decreases, with the bowing side of the curve of the curved sections 45 as the compression side.

In a case where a large load is inputted to the vicinity of the curved sections 45 on account of an offset collision, the positions of both ends of the bumper reinforcement 40 change little with respect to the body 2 , while the positions of the curved sections 45 with respect to the body 2 change significantly. As a result, the bending moment inputted on account of an offset collision is substantial in the curved sections 45, and is maximal in the vicinity of the maximal curvature portions Cmax. Accordingly, the maximal curvature portions Cmax of the bumper reinforcement 40 correspond to the portions at which the bending moment derived from the offset collision is maximal. Buckling strength is increased thus at the portions at which bending moment is maximal.

That is, the portions of maximal curvature of the ridgelines 43 that extend in the longitudinal direction of the bumper 6 of the vehicle 1 correspond to the portions of the bumper 6 at which the bending moment is maximal. The curving direction of the ridgelines 43 is such that the compression side of bending from the bending moment is on the bowing side of the curve. As a result, when a bending moment is inputted to the bumper reinforcement 40 on account of an offset collision, the bumper reinforcement 40 deforms in such a manner that the section modulus increases, and there increases the buckling strength at portions at which the bending moment is maximal.

During an offset collision, therefore, the bumper reinforcement 40 can take a large bending moment, in a state where buckling is unlikely, when a bending moment is inputted to the bumper reinforcement 40 through input, to the bumper reinforcement 40, of a load derived from the offset collision.

The portions in the bumper reinforcement 40 at which the curvature of the ridgelines 43 that extend in the longitudinal direction of the bumper 6 is maximal correspond thus to the portions at which the bending moment of the bumper 6 is maximal. As a result, imparting curvature allows increasing the buckling strength of the bumper reinforcement 40 and allows increasing more reliably the strength at portions that must have substantial strength since the bending moment is greatest there. Thus, desired strength toward inputted loads can be secured by simply imparting curvature by causing the bumper reinforcement 40 to be curved, without providing any new reinforcement member in the bumper 6. The strength of the bumper reinforcement 40 can be enhanced as a result without an increase in reinforcement members.

The portions at which the curvature of the ridgelines 43 of the bumper 6 is maximal are positioned at two sites spaced from the center of the vehicle 1 in the width direction. As a result, this allows increasing the strength of the bumper 6 at two sites spaced from the center of the vehicle 1 in the width direction, which in turn allows securing strength against large loads that are inputted to one side of the vehicle 1 in the width direction, such as those during an offset collision. The strength of the bumper reinforcement 40 against inputted loads curvature an offset collision can be enhanced without an increase in reinforcement members.

### Embodiment 2

A bumper reinforcement 50 according to Embodiment **2** has substantially the same configuration as the bumper reinforcement 40 according to Embodiment **1**, but has a characterizing feature in that nowa bead 51 is provided in the bumper reinforcement 50. Other features are identical to those of Embodiment **1**. Accordingly, the same reference numerals will be used, and a recurrent explanation of the identical features will be omitted.

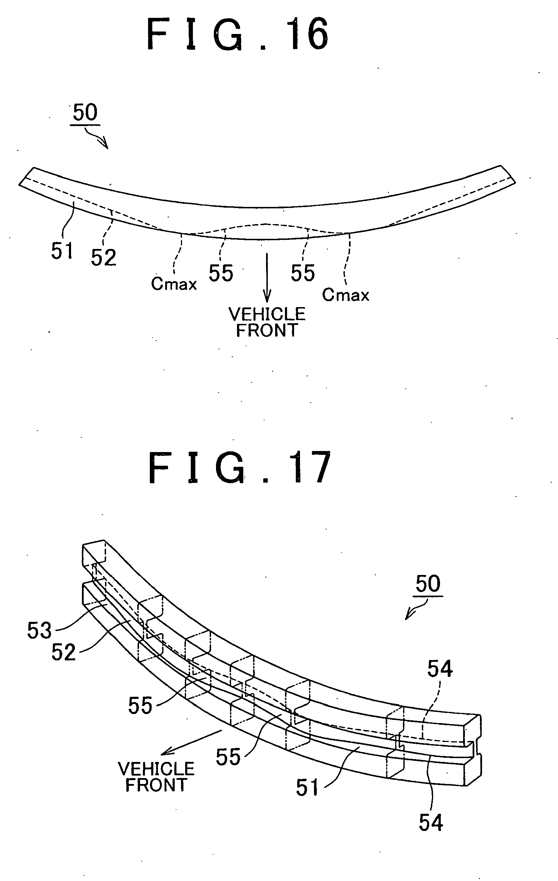

FIG. 16 is a plan-view diagram illustrating a bumper reinforcement according to Embodiment **2**. FIG. 17 is a perspective-view diagram of the bumper reinforcement illustrated in FIG. 16. The bumper reinforcement 50, which is Embodiment **2** of the vehicle body member according to the invention, is provided in each bumper 6 of the vehicle 1, like the bumper reinforcement 40 according to Embodiment **1**. In the bumper reinforcement 40 according to Embodiment 1, the entire bumper reinforcement 40 is curved to a desired shape. In the bumper reinforcement 50 according to Embodiment **2**, by contrast, there is positioned a bead 51 formed to a groove-like shape, such that the shape of the bead 51 is curved to a desired shape.

In a more detailed explanation, the bead 51 is formed to a groove-like shape along the longitudinal direction of the bumper reinforcement 50, at least on the front face of the bumper reinforcement 50 in the front-rear direction of the vehicle 1. The groove depth of the bead 51 thus formed on the front-side face of the vehicle 1 in the front-rear direction varies depending on the position in the longitudinal direction of the bumper reinforcement 50, i.e. on the position in the width direction of the vehicle 1.

Specifically, a bead bottom section 52 which is the groove bottom of the bead 51 shaped to a groove-like shape is formed so as to curve bulging frontward of the vehicle 1. Curved sections 55, being portions at which the bead bottom section 52 is curved, are formed at two sites spaced apart from each other. The two curved sections 55 are positioned at portions that are bilaterally symmetrical with respect to the vehicle width centerline, like the curved sections 45 of the bumper reinforcement 40 according to Embodiment 3. As a result, the maximal curvature portions Cmax, which are portions at which curvature is greatest, of the curved sections 55 formed at the two sites, are positioned at portions that are bilaterally symmetrical with respect to the vehicle width centerline.

Further, the maximal curvature portions Cmax positioned thus at two bilaterally symmetrical sites are positioned at portions within an area such that the distance from the vehicle width centerline ranges.from 10% to 30% of the vehicle width. The curvature of the bead 51 having these curved sections 55 and having maximal curvature portions Cmax within the above area varies continuously so as to decrease gradually away from the maximal curvature portions Cmax.

That is, ridgelines 54 of the bead 51 formed in the bumper reinforcement 50, being connection portions between the bead bottom section 52 and the bead wall section 53 that intersects the bead bottom section 52, extend in the longitudinal direction of the bumper 6, such that in the ridgelines 54 as well, the maximal curvature portion Cmax, being the portion at which curvature is maximal, is positioned at two sites spaced from the center of the vehicle 1 in the width direction.

An explanation follows next on the effect of the bumper reinforcement 50 according to Embodiment **2** having the above-described configuration. The bead 51 is formed in the bumper reinforcement 50. The bead 51 has the curved sections 55 that are curved in the same way as in the curved sections 45 of the bumper reinforcement 40 according to Embodiment **1**. As a result, when a large load is inputted to the bumper 6 on account of an offset collision, the load is inputted to the bumper reinforcement 50 as a load in a direction that intersects the bead bottom section 52, and is inputted as a load in a direction such that the curvature of the curved sections 55 decreases, with the bowing side of the curve of the curved sections 55 as the compression side.

The positions of maximal curvature portion Cmax of the curved sections 55 of the bead 51 correspond to the portions at which the bending moment from an offset collision is maximal. Accordingly, the curved sections 55 of the bead 51 increase the buckling strength at the portions at which bending moment is maximal on account of the load inputted to the bumper reinforcement 50 during an offset collision. During an offset collision, therefore, the bumper reinforcement 50 can take a large bending moment, in a state where buckling is unlikely, when a bending moment is inputted to the bumper reinforcement 50 through input, to the bumper reinforcement 50, of a load derived from the offset collision.

The portions in the bumper reinforcement 50 at which the curvature of the ridgeline 54 of the bead 51 is maximal correspond thus to the portions at which the bending moment of the bumper 6 is maximal. This allows increasing more reliably the strength at portions that must have substantial strength since the bending moment is greatest there. Thus, desired strength toward inputted loads can be secured by simply providing the curved sections 55 in the bead 51, without providing any new reinforcement member in the bumper 6. The strength of the bumper reinforcement 50 can be enhanced as a result without an increase in reinforcement members.

Since strength is increased by providing the groove-like bead 51 in the bumper reinforcement 50 and increasing the curvature by curving the bead 51, there can be secured strength against bending moment, without affecting the outer shape of the bumper reinforcement 50. As a result, the outer panel 7 of the bumper 6 can be shaped according to the external design. Desired strength toward inputted loads can be secured while allowing the bumper reinforcement 50 to be shaped in accordance with the outer panel 7 having thus a prescribed shape. The strength of the bumper reinforcement 50 can thus be enhanced without affecting the external appearance of the vehicle 1.

### Explanatory Example 3

In **explanatory example 3** of the vehicle body member, a rocker rail 60 provided in the vehicle 1, and different from the center pillar 13 and so forth according to **explanatory example 1,** constitutes **explanatory example 3** of vehicle body member. Other features of the vehicle 1 having the rocker rail 60 are identical to those of **explanatory example** 1. Accordingly, the same reference numerals will be used, and a recurrent explanation of the identical features will be omitted

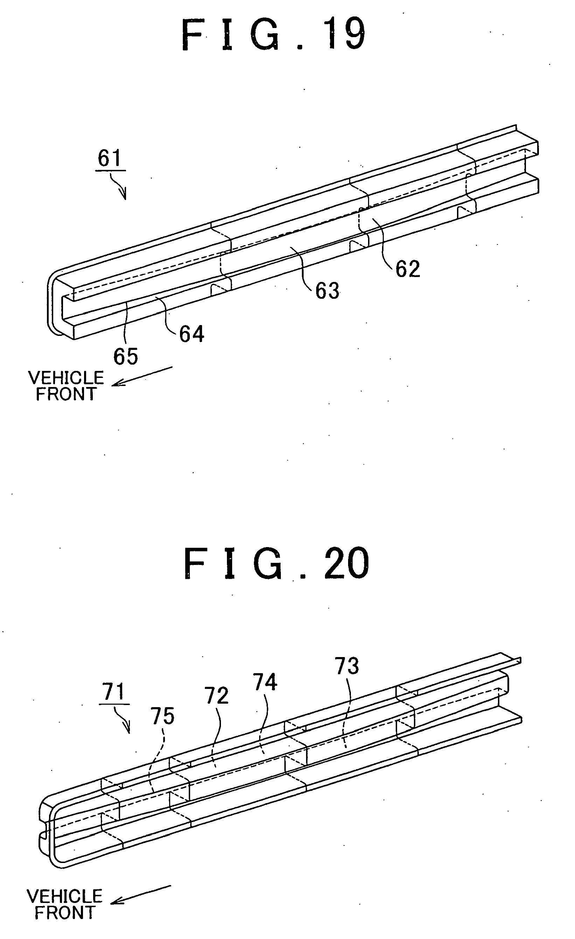

FIG. 18 is a plan-view diagram illustrating a rocker rail according to **explanatory example 3.** FIG. 19 is a perspective-view diagram of an outer reinforcement of the rocker rail illustrated in FIG. 18. FIG. 20 is a perspective-view diagram of a rocker inner of the rocker rail illustrated in FIG. 18 viewed from the outer reinforcement. The rocker rail 60, being **explanatory example 3** of the vehicle body member, is provided in the frame member 10, similarly to the rocker rail 12 provided in the frame member 10 that has the center pillar 13 according to **explanatory example 1.** The rocker rail 60 is provided in the form of a front-rear direction skeleton member, which is a member that extends in the front-rear direction of the vehicle 1. The center pillar 13 is joined to the rocker rail 60 in the vicinity of the center of the rocker rail 60, in the longitudinal direction of the latter. The rocker rail 60 is formed by a combination of an outer reinforcement 61 that is positioned outward, in the width direction of the vehicle 1, and a rocker inner 71 that is positioned inward in the width direction of the vehicle 1.

A bead is formed in the rocker rail 60 thus provided, at a side face of the rocker rail 60 in the width direction of the vehicle 1. The bead, whose depth direction is the width direction of the vehicle 1, is formed to a groove-like shape extending in the front-rear direction of the vehicle 1. The bead is formed both on the outer reinforcement 61 and the rocker inner 71. The bead formed in the outer reinforcement 61 is an outer-side bead 62 and the bead formed in the rocker inner 71 is an inner-side bead 72.

The outer-side bead 62 and the inner-side bead 72 are both-formed curved bulging outward in the width direction of the vehicle 1. Specifically, an outer-side bead bottom section 63, being a groove bottom of the outer-side bead 62 formed to a groove-like shape, is formed bulging outward in the width direction of the vehicle 1. Similarly, an inner-side bead bottom section 73, being a groove bottom of inner-side bead 72 formed to a groove-like shape, is formed bulging outward in the width direction of the vehicle 1.

Accordingly, the depth of both the outer-side bead 62 and the inner-side bead 72 varies depending on the position in the longitudinal direction of the rocker rail 60. In the outer-side bead 62, the depth of the outer-side bead bottom section 63 becomes shallower further outward in the width direction of the vehicle 1. In the inner-side bead 72, conversely, the depth of the inner-side bead bottom section 73 becomes deeper further outward in the width direction of the vehicle 1.

The depth of both the outer-side bead 62 and the inner-side bead 72 thus curvedly formed varies depending on the position in the longitudinal direction of the rocker rail 60 so that the curvature of the beads is greatest at the position of joining with the center pillar 13, in the longitudinal direction of the rocker rail 60. That is, the maximal curvature portion Cmax, being the portion at which curvature is maximal, in the outer-side bead 62 and of the inner-side bead 72, is positioned at the joint of the rocker rail 60 and the center pillar 13.

In the outer-side bead 62 and the inner-side bead 72 formed in the rocker rail 60, thus, the portion of maximal curvature of ridgelines of the inner-side bead 72 and the outer-side bead 62 that extend in the longitudinal direction of the rocker rail 60, is positioned at the joint of the center pillar 13 and the rocker rail 60.

Specifically, the outer-side bead 62 formed in the outer reinforcement 61 has a ridgeline 65, being a connection portion between the outer-side bead bottom section 63 and an outer-side bead wall section 64 that intersects the outer-side bead bottom section 63, such that the ridgeline 65 extends in the longitudinal direction of the rocker rail 60. In the ridgeline 65 as well, a maximal curvature portion Cmax being a portion at which curvature is maximal is positioned at the joint of the center pillar 13 and the rocker rail 60.

Similarly, the inner-side bead 72 formed in the rocker inner 71 has a ridgeline 75, being a connection portion between an inner-side bead bottom section 73 and an inner-side bead wall section 74 that intersects the inner-side bead bottom section 73, such that the ridgeline 75 extends in the longitudinal direction of the rocker rail 60. In the ridgeline 75 as well, a maximal curvature portion Cmax being a portion at which curvature is maximal is positioned at the joint of the center pillar 13 and the rocker rail 60.

An explanation follows next on the effect of the rocker rail 60 according to **explanatory example 3** having the above-described configuration. The outer-side bead 62 and the inner-side bead 72 are formed in the rocker rail 60, in such a manner that both the outer-side bead 62 and the inner-side bead 72 are curved bulging outward in the width direction of the vehicle 1. The curvature of both the outer-side bead 62 and the inner-side bead 72 varies depending on the position in the longitudinal direction of the rocker rail 60, such that the maximal curvature portion Cmax is positioned at the portion of the joint of the center pillar 13 and the rocker rail 60. As a result, the rocker rail 60 is imparted strength against loads that.are inputted in a direction running inward from outside the vehicle 1 in the width direction of the latter.

In a case where, for instance, a load derived from a side collision is inputted to the center pillar 13, in a direction running inward from outside the vehicle 1 in the width direction of the latter, and the load is inputted to the rocker rail 60, the load is inputted to the joint of the rocker rail 60 and the center pillar 13 in a direction toward the interior in the width direction of the vehicle 1. Upon input of a load onto the rocker rail 60 in that direction, the load is inputted to the rocker rail 60 as a bending moment in a direction such that there decreases the curvature of the curving outer-side bead 62 and the curvature of the curving inner-side bead 72.

That is, the load inputted to the rocker rail 60 from the center pillar 13 on account of a side collision is inputted as a load in a direction that intersects the outer-side bead bottom section 63 and the inner-side bead bottom section 73. When a load is inputted in that direction, then the side of the outer-side bead 62, positioned at the bowing side of the curve of the outer-side bead 62 and of the inner-side bead 72, constitutes the compression side of bending on account of the bending moment that is inputted in a direction such that the curvature of the beads decreases. As a result, the outer-side bead 62 deforms so as to move away from the inner-side bead 72 when a bending moment is inputted in a direction such that the curvature of the curving outer-side bead 62 and the curvature of the curving inner-side bead 72 decrease.

In consequence, the cross-sectional shape of the rocker rail 60 that has the outer-side bead 62 and the inner-side bead 72 deforms in such a manner that the section modulus increases, at the joint of the center pillar 13 and the rocker rail 60. The buckling strength is increased thereby. During a side collision, as a result, the rocker rail 60 can take, in a state where buckling is unlikely to occur, a bending moment that is inputted to the rocker rail 60 through input of a collision-derived load to the rocker rail 60, from the joint with the center pillar 13.

A bending moment is thus inputted to the rocker rail 60 on account of the load inputted from the center pillar 13 to the rocker rail 60 during a side collision. The maximal bending moment in this case is positioned at the joint of the rocker rail 60 and the center pillar 13. Accordingly, the maximal curvature portions Cmax of the outer-side bead 62 formed in the outer reinforcement 61, and of the inner-side bead 72 formed in the rocker inner 71, are positioned at the portion of the joint of the rocker rail. 60 and the center pillar 13. That is, the portion of maximal curvature of the ridgeline 65 of the outer-side bead 62 extending in the longitudinal direction of the rocker rail 60, and the portion of maximal curvature of the ridgeline 75 of the inner-side bead 72 extending in the longitudinal direction of the rocker rail 60, which in turn extends in the front-rear direction of the vehicle 1, correspond to the portion of the rocker rail 60 at which bending moment is maximal. As a result, this allows appropriately increasing the strength against the bending moment that is inputted to the rocker rail 60, from the center pillar 13, during a side collision, and allows the rocker rail 60 to take the bending moment, in a state where buckling is yet unlikelier to occur.

In the rocker rail 60, thus, the portion at which the curvature of the ridgelines 65, 75 of the outer-side bead 62 and of the inner-side bead 72 is maximal corresponds to the portion at which the bending moment of the rocker rail 60 is maximal. This allows increasing more reliably the strength at portions that must have substantial strength since the bending moment is greatest there. Therefore, desired strength toward inputted loads can be secured by simply imparting curvature through curving of the outer-side bead 62 and of the inner-side bead 72, without providing any new reinforcement member in the rocker rail 60. The strength of the rocker rail 60 can be enhanced as a result without an increase in reinforcement members.

Also, portions at which the curvature of the ridgelines 65, 75 of the outer-side bead 62 and of the inner-side bead 72 is maximal are positioned at the joint of the center pillar 13 and the rocker rail 60. Therefore, the rocker rail 60 can take large loads that are inputted to the rocker rail 60 from the center pillar 13. As a result, the center pillar 13 can be supported while there is suppressed deformation of the rocker rail 60; even when a large load, derived for instance from a side collision, is inputted to the center pillar 13. The strength of vehicle 1 as a whole can be enhanced as a result without an increase in reinforcement members.

### Explanatory Example 4

A rocker rail 80 according to **explanatory example 4** has a configuration substantially identical to that of the rocker rail 60 according to **explanatory example 3**. However, the rocker rail 80 is provided with no bead. Instead, an outer reinforcement 81 of the rocker rail 80 is curved. Other features are identical to those of **explanatory example 3**. Accordingly, the same reference numerals will be used, and a recurrent explanation of the identical features will be omitted.

FIG. 21 is a plan-view diagram illustrating a rocker rail according to Embodiment 6. FIG. 22 is a perspective-view diagram of an outer reinforcement of the rocker rail illustrated in FIG. 21. Similarly to the rocker rail 60 according to **explanatory example 3**, the rocker rail 80, being **explanatory example 4** of the vehicle body member, is formed by a combination of an outer reinforcement 81 and a rocker inner 88. The center pillar 13 is joined to the rocker rail 80 in the vicinity of the center of the rocker rail 80, in the longitudinal direction of the latter. In the rocker rail 80 according to the present **explanatory example 4,** the outer-side bead 62 and the inner-side bead 72 are not provided. Instead, the outer reinforcement 81 is formed so as to have a curved portion.

In the outer reinforcement 81, specifically, a vertical face 82, being a portion positioned outward in the width direction of the vehicle 1, is curved bulging outward in the width direction of the vehicle 1. The curvature of the vertical face 82 thus varies depending on the position in the longitudinal direction of the rocker rail 80, so that the curvature of the beads is greatest at the position of joining with the center pillar 13, in the longitudinal direction of the rocker rail 80. That is, the maximal curvature portion Cmax, being the portion at which curvature is maximal, in the curving vertical face 82, is positioned at the joint of the rocker rail 80 and the center pillar 13.

That is, the outer reinforcement 81 of the rocker rail 80 has ridgelines 84 that are connection portions between the vertical face 82 and a horizontal face 83 that intersects the vertical face 82, such that the ridgelines 84 extend in the longitudinal direction of the rocker rail 80. In each ridgeline 84 as well, a maximal curvature portion Cmax being a portion at which curvature is maximal is positioned at the joint of the center pillar 13 and the rocker rail 80.

An explanation follows next on the effect of the rocker rail 80 according to **explanatory example 4** having the above-described configuration. The vertical face 82 of the outer reinforcement 81 in the rocker rail 80 is curved bulging outward in the width direction of the vehicle 1. Also, the curvature of the vertical face 82 varies depending on the position in the longitudinal direction of the rocker rail 80, such that the maximal curvature portion Cmax is positioned at the portion of the joint of the center pillar 13 and the rocker rail 80. As a result, the rocker rail 80 is imparted strength against loads that are inputted in a direction running inward from outside the vehicle 1 in the width direction of the latter.

In consequence, when a load derived for instance from a side collision is inputted to the rocker rail 80, from the center pillar 13, in a direction running inward from outside the vehicle 1 in the width direction of the latter, the load is inputted to the outer reinforcement 81 as a load in a direction that intersects the vertical face 82. Upon.input of this load to the rocker rail 80, therefore, the load is inputted as a bending moment in a direction such that the curvature of the curving vertical face 82 decreases, with the bowing side of the curve of the vertical face 82 of the outer reinforcement 81 being the compression side. When a bending moment is thus inputted in a direction such that the curvature of the curving vertical face 82 of the outer reinforcement 81 decreases, the vertical face 82 of the outer reinforcement 81 deforms thereupon so as to move away from the rocker inner 88.

As a result, the cross-sectional shape of the rocker rail 80 deforms in such a manner that the section modulus increases, at the joint of the center pillar 13 and the rocker rail 80. The buckling strength is increased thereby. During a side collision, as a result, the rocker rail 80 can take, in a state where buckling is unlikely to occur, a bending moment that is inputted to the rocker rail 80 through input of a collision-derived load to the rocker rail 80, from the joint with the' center pillar 13.

The maximal bending moment during a side collision is positioned at the joint of the rocker rail 80 and the center pillar 13. The maximal curvature portion Cmax of the vertical face 82 of the outer reinforcement 81 is positioned at a portion of the joint of the rocker rail 80 and the center pillar 13. That is, the portions of maximal curvature of the ridgelines 84 of the outer reinforcement 81 extending in the longitudinal direction of the rocker rail 80, which in turn extends in the front-rear direction of the vehicle 1, correspond to the portion of the rocker rail 80 at which bending moment is maximal. As a result, this allows appropriately increasing the strength against the bending moment that is inputted to the rocker rail 80, from the center pillar 13, during a side collision, and allows the rocker rail 80 to take the bending moment, in a state where buckling is yet unlikelier to occur.

In the rocker rail 80, thus, the portions at which the curvature of the ridgelines 84 of the outer reinforcement 81 is maximal correspond to the portion at which the bending moment of the rocker rail 80 is maximal. This allows increasing more reliably the strength at portions that must have substantial strength since the bending moment is greatest there. Therefore, desired strength toward inputted loads can be secured by simply imparting curvature through curving of the vertical face 82 of the outer reinforcement 81, without providing any new reinforcement member in the rocker rail 80. The strength of the rocker rail 80 can be enhanced as a result without an increase in reinforcement members.

Also, desired strength can be secured by simply imparting curvature through curving of the vertical face 82 of the outer reinforcement 81, without providing any bead in the rocker rail 80. Strength can thus be secured in a simple manner. The strength of the rocker rail 80 can be enhanced yet more easily as a result, without an increase in reinforcement members.

The maximal curvature portion of the ridgelines 84 of the outer reinforcement 81 is positioned at the joint of the center pillar 13 and the rocker rail 80. Therefore, the rocker rail 80 can take large loads that are inputted to the rocker rail 80 from the center pillar 13. As a result, the center pillar 13 can be supported while there is suppressed deformation of the rocker rail 80, even when a large load, derived for instance from a side collision, is inputted to the center pillar 13. The strength of vehicle 1 as a whole can be enhanced as a result without an increase in reinforcement members.

### Explanatory Example 5

A rocker rail 90 according to **explanatory example 5** has a configuration substantially identical to that of the rocker rail 60 according to **explanatory example 3**, but now the curvature of the bead changes at the portion at which the rocker rail is joined to the center pillar 13. Other features are identical to those of **explanatory example 3**. Accordingly, the same reference numerals will be used, and a recurrent explanation of the identical features will be omitted.

FIG. 23 is a plan-view diagram illustrating a rocker rail according to **explanatory example 5.** FIG. 24 is a perspective-view diagram of an outer reinforcement of the rocker rail illustrated in FIG. 23. Similarly to the rocker rail 60 according to **explanatory example 3**, the rocker rail 90, being **explanatory example 5**, of the vehicle body member, is formed by a combination of an outer reinforcement 91 and a rocker inner 98. The center pillar 13 is joined to the rocker rail 90 in the vicinity of the center of the rocker rail 90, in the longitudinal direction of the latter. In the rocker rail 90 according to the present **explanatory example 5**, no bead is formed in the rocker inner 98. A bead 92 is formed in the outer reinforcement 91 alone.

Thus, the bead 92 formed in the outer reinforcement 91 is broadly formed curving so as to bulge outward in the width direction of the vehicle 1. At the portion at which the center pillar 13 is joined to the rocker rail 90, however, the curvature of the bead 92 changes, and exhibits a concave-bowing profile. In the bead 92, specifically, a bead bottom section 93, being a groove bottom of the bead 92 that is formed to a groove shape in the vicinity of the joint of the rocker rail 90 and the center pillar 13, has two bulges 96 that are portions formed bulging outward in the width direction of the vehicle 1. Between the two bulges 96, the bead bottom section 93 has a recess 97 that is a portion formed bulging inward in the width direction of the vehicle 1.

From among the bulges 96 and the recess 97, the bulges 96 are respectively provided at portions positioned at both ends, in the front-rear direction of the vehicle 1, of the center pillar 13 that is joined to the rocker rail 90, namely at portions at which wall faces of the center pillar 13 is positioned, at both ends in the front-rear direction of the vehicle 1. By contrast, the recess 97 is provided between the two bulges 96 in the front-rear direction of the vehicle 1, at a position between the wall faces of the center pillar 13 that is joined to the rocker rail 90, at both ends in the front-rear direction of the vehicle 1.

The bead 92 formed in the outer reinforcement 91 has thus two bulges 96 and one recess 97. Therefore, although the curvature varies depending on the position in the longitudinal direction of the rocker rail 90, the maximal curvature portion Cmax, being the portion at which the curvature is maximal, is positioned at the portions of the two bulges 96. Specifically, the maximal curvature portion Cmax is provided at two sites. A low curvature portion Clow, being a portion at which curvature is small, is positioned at the portion of the recess 97.

Thus, the maximal curvature portion Cmax is positioned at the portion of the two bulges 96, while the low curvature portion Clow is positioned at the portion of the recess 97. Accordingly, the maximal curvature portion Cmax is positioned at a portion at which there are positioned the wall faces of the center pillar 13, at both ends in the front-rear direction of the vehicle 1, while the low curvature portion Clow is positioned at a portion between the wall face of the center pillar 13 at both ends in the front-rear direction of the vehicle 1.

That is, a ridgeline 95 of the bead 92 that is formed in the outer reinforcement 91, and being a connection portion between the bead bottom section 93 and the bead wall section 94 that intersects the bead bottom section 93, extends in the longitudinal direction of the rocker rail 90, such that in the ridgeline 95 as well, the maximal curvature portion Cmax, being a portion at which curvature is maximal, is positioned at a portion at which there are positioned the wall faces of the center pillar 13 at both ends in the front-rear direction of the vehicle 1. In the ridgeline 95 as well, the low curvature portion Clow, being a portion at which the curvature is small, is positioned at a portion between the wall faces of the center pillar 13 at both ends in the.front-rear direction of the vehicle 1.

An explanation follows next on the effect of the rocker rail 90 according to **explanatory example 5** having the above-described configuration. The bead 92 of the outer reinforcement 91 in the rocker rail 90 is broadly curved bulging outward in the width direction of the vehicle 1. The curvature of the bead 92 varies depending on the position in the longitudinal direction of the rocker rail 90, such that the maximal curvature portion Cmax is positioned at a portion at which there are positioned the wall faces of the center pillar 13 that is joined to the rocker rail 90, at both ends in the front-rear direction, of the vehicle 1. As a result, there increases the buckling strength of the rocker rail 90 against loads that are inputted in an direction running inward from outside the vehicle 1 in the width direction of the latter.

As a result, in a case where a load is inputted to the rocker rail 90 from the center pillar 13 in a direction running inward from outside the vehicle 1 in the width direction of the latter, for instance during a side collision, the load is inputted, in a direction that intersects the bead bottom section 93, as a bending moment that is inputted in a direction such that the curvature of the bulges 96 decreases, with the bulges 96 of the bead 92 constituting the compression side, in the rocker rail 90 viewed as a whole. In a case where a bending moment is thus inputted to the rocker rail 90 in a direction such that the curvature of the bulges 96 of the bead 92 decreases, the bulges 96 of the bead 92 constitute thereupon the compression side. As a result, the rocker rail 90 can take the bending moment in a state where the occurrence of buckling is unlikely.

During a side collision, thus, a large load is inputted to the rocker rail 90, from the joint of the center pillar 13 and the rocker rail 90. However, the shape of the rocker rail 90 is such that the portions of maximal curvature of the ridgeline 95 of the bead 92 that extends in the longitudinal direction of the rocker rail 90 correspond to portions at which the bending moment that is inputted to the rocker rail 90 is likely to be large. As a result, this allows appropriately increasing the strength against the bending moment that is inputted to the rocker rail 90, from the center pillar 13, during a side collision, and allows the rocker rail 90 to take the bending moment, in a state where buckling is unlikely to occur.

If the load inputted to the rocker rail 90 from the center pillar 13 exceeds the resistance of the rocker rail 90, the rocker rail 90 deforms at the portion of the low curvature portion Clow, that is positioned at the recess 97 of the bead 92 and is a portion at which the curvature is small. That is, the buckling strength against the bending moment derived from the load inputted to the rocker rail 90 from the center pillar 13 is lower at the low curvature portion Clow. Therefore, if the load inputted to the rocker rail 90 is greater than a predetermined magnitude, the low curvature portion Clow, at which buckling strength is lower, deforms ahead of other portions of the rocker rail 90.

Upon input of a large load to the rocker rail 90, from the center pillar 13, deformation starts at the low curvature portion Clow. However, maximal curvature portions Cmax are positioned on both sides of the low curvature portion Clow, in the front-rear direction of the vehicle 1. The maximal curvature portions Cmax have higher buckling strength, and deform less readily, also when a large load is inputted. Even if deformation of the rocker rail 90 starts at the low curvature portion Clow, therefore, the deformation is arrested at the maximal curvature portions Cmax that are positioned on both sides of the low curvature portion Clow.

That is, the portion of small curvature of the ridgeline 95 of the bead 92 provided in the rocker rail 90 corresponds to the portion at which the bending moment inputted to the rocker rail 90 is likely to be large. Moreover, the small-curvature portion of the ridgeline 95 is flanked by high-curvature portions. As a result, the rocker rail 90 can be deformed at a desired position, while the spread of deformation is arrested, in case that the bending moment inputted to the rocker rail 90 from the center pillar 13, during a side collision, is equal to or greater than a predetermined bending moment.

In the rocker rail 90, the maximal curvature portion of the ridgeline 95 of the bead 92 corresponds to the portion at which the bending moment on the rocker rail 90 is large. As a result, this allows increasing more reliably the strength at portions that must have substantial strength, and allows securing desired strength against inputted loads, without providing new reinforcement members in the rocker rail 90. The strength of the rocker rail 90 can be enhanced as a result without an increase in reinforcement members.

The low curvature portion Clow provided in the bead 92 is flanked by two maximal curvature portions Cmax. Upon input of a large load to the rocker rail 90 from the center pillar 13, the rocker rail 90 is deformed at the low curvature portion Clow, while spread of the deformation that originates in the low curvature portion Clow can be arrested at the maximal curvature portions Cmax. As a result, deformation at a desired position allows the load-derived stress to be dissipated over the entire rocker rail 90 when a large load is inputted to the rocker rail 90. Also, the strength against loads can be preserved by suppressing spread of the deformation of the rocker rail 90. Therefore, large loads that are inputted to the rocker rail 9.0 from the center pillar 13 can be taken more reliably by the rocker rail 90 in a state where the entire rocker rail 90 does not deform significantly. The strength of the rocker rail 90 can be increased more reliably as a result, without an increase in reinforcement members.

### Explanatory Example 6

In **explanatory example 6** of the vehicle body member, a kick-up section 100 provided in the vehicle 1, and different from the center pillar 13 and so forth according to **explanatory example 1,** constitutes **explanatory example 6** of the vehicle body member. Other features of the vehicle 1 having the kick-up section 100 are identical to those of **explanatory example 1.** Accordingly, the same reference numerals will be used, and a recurrent explanation of the identical features will be omitted.

FIG. 25 is a side-view diagram illustrating a kick-up section according to **explanatory example 6.** The kick-up section 100, which is **explanatory example 6** of the vehicle body member, is provided with a front side member 101 that is disposed frontward of the frame member 10. having the center pillar 13 according to **explanatory example 1,** and is connected to the frame member 10, such that the front side member 101 secures the strength of the body 2 further to the front than the frame member 10. In order to avoid a front wheel, a front wheel support member, a front wheel steering member and so forth of the vehicle 1, the front side member 101 disposed ahead of the frame member 10 rises up at a predetermined position, in the direction from the side of the frame member 10 toward the front of the vehicle 1. This portion is the kick-up section 100. Accordingly, the kick-up section 100 is formed in such a manner that a predetermined angle that ranges from 90° to 180° is formed by a portion formed substantially horizontally and a rising portion.

The kick-up section 100 is positioned in the vicinity of, for instance, a support member and so forth of a front wheel. Therefore, the kick-up section 100 has mounted thereon a member such as a suspension bracket 118 being a member that supports a suspension member of a front wheel.

Since the kick-up section 100 is thus formed through rising of the front side member 101, a kick-up reinforcement 111, as a reinforcement member, is provided to reinforce that portion. The kick-up reinforcement 111 is provided along the front side member 101 on the inward side of the kick-up section 100, i.e. on the inner angle side of the front side member 101 that is formed so as to rise up. As a result, the kick-up reinforcement 111 is also formed to a shape that rises up along the front side member 101.

FIG. 26 is a perspective-view diagram of a front side member provided in the kick-up section illustrated in FIG. 25. FIG. 27 is a perspective-view diagram of a kick-up reinforcement provided in the kick-up section illustrated in FIG. 25. FIG. 28 is a cross-sectional diagram along XXVIII-XXVIII in FIG. 25. FIG. 29 is a cross-sectional diagram along XXVIIII-XXVIIII in FIG. 25. A bead formed to a groove-like shape is provided in both the kick-up reinforcement 111 and the front side member 101 of the kick-up section 100 formed as described above. From among these beads, a member-side bead 102, being a bead provided in the front side member 101, is formed so as to extend in the front-rear direction of the vehicle 1, on the outer angle side of the front side member 101 that is formed rising up in the kick-up section 100. That is, the member-side bead 102 is a downward bead the opening whereof faces downward. A reinforcement-side bead 112, being a bead provided in the kick-up reinforcement 111, extends in the front-rear direction of the vehicle 1, on the inner angle side of the kick-sup reinforcement 111 that is formed rising up in the kick-up section 100. That is, the reinforcement-side bead 112 is an upward bead the opening whereof faces upward.

The member-side bead 102 and the reinforcement-side bead 112 formed in the kick-up section 100 are both curvedly formed bulging toward the inner angle side of the kick-up section .100, i.e. bulging upward. That is, a member-side bead bottom section 103, being a groove bottom of the member-side bead 102 that is formed to a groove-like shape, is formed so as to curve bulging toward the inner angle side of the kick-up section 100. Similarly, a reinforcement-side bead bottom section 113, being a groove bottom of the reinforcement-side bead 112 that is formed to a groove-like shape, is formed so as to curve bulging toward the inner angle side of the kick-up section 100.

Accordingly, the depth of the member-side bead 102 and of the reinforcement-side bead 112 varies depending on the position in the longitudinal direction of the kick-up section 100, i.e. depending on the position in the front-rear direction of the vehicle 1. The depth of the member-side bead bottom section 103 of the member-side bead 102 becomes deeper in the inner angle direction of the kick-up section 100. Conversely, the depth of the reinforcement-side bead bottom section 113 of the reinforcement-side bead 112 becomes shallower in the inner angle direction of the kick-up section 100.

Thus, the curvature of the curvedly shaped member-side bead 102 and reinforcement-side bead 112 varies depending on the position along the longitudinal direction of the kick-up section 100, such that the curvature is greatest at the position of the apex of the kick-up section 100, in the longitudinal direction of the kick-up section 100. That is, the maximal curvature portion Cmax, being the portion at which the curvature is maximal in the member-side bead 102, as well as the maximal curvature portion Cmax, being the portion at which the curvature is maximal in the reinforcement-side bead 112, are both positioned at substantially the same position in the longitudinal direction of the kick-up section 100, i.e. are both positioned at substantially the same position as that of the apex of the kick-up section 100.

In the member side bead 102 and the reinforcement side bead 112 formed in the kick-up section 100, specifically, the portions of maximal curvature of the ridgelines of the member-side bead 102 and of the reinforcement-side bead 112 extending in the longitudinal direction of the kick-up section 100 are positioned at substantially the same position in the longitudinal direction of the kick-up section 100.

More specifically, ridgelines 105 of the member-side bead 102 formed in the front side member 101, as connection portions between the member-side bead bottom section 103 and member-side bead wall sections 104 that intersect the member-side bead bottom section 103, extend both in the longitudinal direction of the kick-up section 100, such that in the ridgelines 105 as well, maximal curvature portions Cmax, being portions at which the curvature is maximal, are positioned in the vicinity of the apex of the kick-up section 100.

Similarly, ridgelines 115 of the reinforcement-side bead 112 formed in the kick-up reinforcement 111, as connection portions between the reinforcement-side bead bottom section 113 and reinforcement-side bead wall sections 114 that intersect the reinforcement-side bead bottom section 113, extend both in the longitudinal direction of the kick-up section 100, such that in the ridgelines 115 as well, maximal curvature portions Cmax, being portions at which the curvature is maximal, are positioned in the vicinity of the apex of the kick-up section 100.

In both the member-side bead 102 and the reinforcement-side bead 112, the maximal curvature portions Cmax are positioned in the vicinity of the apex of the kick-up section 100, and the curvature decreases continuously away from the maximal curvature portions Cmax, in the longitudinal direction of the kick-up section 100. The end of the member-side bead 102 on the frontward side of the vehicle 1 is positioned so as to overlap the suspension bracket 118.

An explanation follows next on the effect of the kick-up section 100 according to **explanatory example 6** having the above-described configuration. The front side member 101 secures mainly the strength of the vehicle 1 further toward the front than the frame member 10. The kick-up section 100 formed so as to rise up is provided in the front side member 101. The member side bead 102 and the reinforcement-side bead 112 are formed in the kick-up section 100. The member-side bead 102 and the reinforcement-side bead 112 are curved bulging toward the inner angle direction of the kick-up section 100. Thus, the curvature of the member-side bead 102 and of the reinforcement-side bead 112 varies depending on the position along the longitudinal direction of the kick-up section 100, such that maximal curvature portions Cmax are positioned at the portion of the apex of the kick-up section 100. This imparts the kick-up section 100 with strength against loads that are inputted in a direction such that the angle of the kick-up section 100 becomes smaller.

In a case where, for instance, a large load is inputted from the front toward the rear of the vehicle 1, on account of a frontal collision, a load from the front toward the rear of the vehicle 1 is inputted to the rising portion of the kick-up section 100. The load inputted in this direction is inputted to the kick-up section 100 as a load such that the angle of the kick-up section 100 becomes smaller. When a load is inputted to the kick-up section 100 in this direction, the load is inputted to the kick-up section 100 as a bending moment in a direction such that there decreases the curvature of the curving member-side bead 102 and the curvature of the curving reinforcement-side bead 112.

That is, the load inputted to the kick-up section 100 on account of a frontal collision is inputted as a load in a direction intersecting the member-side bead bottom section 103 and the reinforcement-side bead bottom section 113. Upon input of a load in such a direction, the side of the reinforcement-side bead 112, positioned on the bowing side of the curve of the member-side bead 102 and of the reinforcement-side bead 112, constitutes the compression side of bending on account of the bending moment that is inputted in a direction such that the curvature of the beads decreases. As a result, the reinforcement-side bead 112 deforms so as to move away from the member-side bead 102 in a case where a bending moment is inputted in a direction such that there decreases the curvature of the curving reinforcement-side bead 112 and the curvature of the curving member-side bead 102.

As a result, the cross-sectional shape of the front side member 101 and of the kick-up reinforcement 111 deforms in such a manner that the section modulus increases, in the vicinity of the apex of the kick-up section 100. The buckling strength is increased thereby. Upon a frontal collision, as a result, the kick-up section 100 can take a bending moment, in a state where the occurrence of buckling is unlikely, when a bending moment is inputted to the kick-up section 100 through input, to the kick-up section 100, of the load derived from the collision.

During a frontal collision, thus, a bending moment is inputted to the kick-up section 100 on account of load generated during the frontal collision. The maximal bending moment in this case is positioned in the vicinity of the apex of the kick-up section 100. Accordingly, the maximal curvature portions Cmax of the member-side bead 102 formed in the front side member 101 and of the reinforcement-side bead 112 formed in the kick-up reinforcement 111 are positioned at portions in the vicinity of the apex of the kick-up section 100. That is, the portion of maximal curvature of the ridgelines 105 of the member-side bead 102 extending in the longitudinal direction of the kick-up section 100, and the portion of maximal curvature of the ridgelines 115 of the reinforcement-side bead 112 extending in the longitudinal direction of the kick-up section 100, which in turn extends in the front-rear direction of the vehicle 1, correspond to the portions at which the bending moment of the kick-up section 100 is maximal. As a result, this allows appropriately increasing the strength against the bending moment that is inputted to the kick-up section 100 during a frontal collision, and allows the kick-up section 100 to take the bending moment, in a state where buckling is yet unlikelier to occur.

In the above kick-up section 100, the portions of maximal curvature of the ridgelines 105, 115 of the member-side bead 102 and of the reinforcement-side bead 112 correspond to the portions at which the bending moment of the kick-up section 100 is maximal. This allows increasing more reliably the strength at portions that must have substantial strength since the bending moment is greatest there. Therefore, desired strength toward inputted loads can be secured by simply imparting curvature through curving of the member-side bead 102 and the reinforcement-side bead 112, without providing any new reinforcement member, and without making the kick-up section 100 thicker. The strength of the kick-up section 100 can be enhanced as a result without an increase in reinforcement members.

### Explanatory Example 7

In **explanatory example 7** of the vehicle body member, a roof rail 120 provided in the vehicle 1, and different from the center pillar 13 and so forth according to **explanatory example** 1, constitutes **explanatory example 7** of the vehicle body member. Other features of the vehicle 1 having the roof rail 120 are identical to those of **explanatory example 1.** Accordingly, the same reference numerals will be used, and a recurrent explanation of the identical features will be omitted.

FIG. 30 is a plan-view diagram illustrating a roof rail according to **explanatory example 7.** FIG. 31 is a perspective-view diagram of the roof rail illustrated in FIG. 30. The roof rail 120, being **explanatory example 7** of the vehicle body member according to the invention is provided in the frame member 10, like the roof rail 14 provided in the frame member 10 that has the center pillar 13 according to **explanatory example 1.** The roof rail 120 is provided in the form of a front-rear direction skeleton member, being a member that extends in a front-rear direction of the vehicle 1. The center pillar 13 is joined to the roof rail 120 in the vicinity of the center of the roof rail 120, in the longitudinal direction of the latter. The roof rail 120 is formed by a combination of an outer reinforcement 121 that is positioned outward, in the width direction of the vehicle 1, and a rail inner 128 that is positioned inward in the width direction of the vehicle 1.

The outer reinforcement 121 and the rail inner 128 are both formed so as to curve bulging outward in the width direction of the vehicle 1. Thus, the curvature of the curvedly formed outer reinforcement 121 and rail inner 128 varies depending on the position in the longitudinal direction of the roof rail 120, so that the curvature of the outer reinforcement 121 and the rail inner 128 is greatest at the position of joining with the center pillar 13, in the longitudinal direction of the roof rail 120. That is, the maximal curvature portions Cmax, being portions at which curvature is maximal, of the outer reinforcement 121 and of the rail inner 128, are positioned at the joint of the roof rail 120 and the center pillar 13. In the roof rail 120, specifically, the portion of maximal curvature of a ridgeline 124 that extends in the longitudinal direction of the roof rail 120 is positioned at the joint of the center pillar 13 and the roof rail 120.

FIG. 32 is a cross-sectional diagram along XXXII-XXXII in FIG. 30. Specifically, the outer reinforcement 121 is formed as a combination of a plurality of surfaces. The center pillar 13 is joined to a joint face 122 that is a face, from among the plurality of surfaces of the outer reinforcement 121, that looks outward in the width direction of the vehicle 1. In the outer reinforcement 121, the ridgeline 124 that is the connection portion between the joint face 122 and an intersecting face 123 that intersects the joint face 122 extends in the longitudinal direction of the roof rail 120. In the ridgeline 124 as well, a maximal curvature portion Cmax being a portion at which curvature is maximal is positioned at the joint of the center pillar 13 and the roof rail 120.

An explanation follows next on the effect of the roof rail 120 according to **explanatory example 7** having the above-described configuration. In the roof rail 120, at least the outer reinforcement 121 is curved bulging outward in the width direction of the vehicle 1. The curvature of the outer reinforcement 121 varies depending on the position in the longitudinal direction of the roof rail 120, such that the maximal curvature portion Cmax is positioned at the portion of the joint of the center pillar 13 and the roof rail 120. As a result, the roof rail 120 is imparted strength against loads that are inputted in a direction running inward from outside the vehicle 1 in the width direction of the latter.

In consequence, when a load derived for instance from a side collision is inputted to the roof rail 120, from the center pillar 13, in a direction running inward from outside the vehicle 1 in the width direction of the latter, the load is inputted to the outer reinforcement 121 as a load in a direction that intersects the joint face 122. Upon input of this load to the roof rail 120, therefore, the load is inputted as a bending moment in a direction such that the curvature of the curving joint face 122 decreases, with the bowing side of the curve of the joint face 122 of the outer reinforcement 121 being the compression side. When a bending moment is thus inputted in a direction such that the curvature of the curving joint face 122 of the outer reinforcement 121 decreases, the joint face 122 of the outer reinforcement 121 deforms thereupon so as to move away from the rail inner 128.

As a result, the cross-sectional shape of the roof rail 120 deforms in such a manner that the section modulus increases, at the joint of the center pillar 13 and the roof rail 120. The buckling strength is increased thereby. During a side collision, as a result, the roof rail 120 can take, in a state where buckling is unlikely to occur, a bending moment that is inputted to the roof rail 120 through input of a collision-derived load to the roof rail 120, from the joint with the center pillar 13.

The maximal bending moment during a side collision is positioned at the joint of the roof rail 120 and the center pillar 13. The maximal curvature portion Cmax of the outer reinforcement 121 is positioned at a portion of the joint of the roof rail 120 and the center pillar 13. That is, the portion of maximal curvature of the ridgeline 124 of the outer reinforcement 121 extending in the longitudinal direction of the roof rail 120, which in turn extends in the front-rear direction of the vehicle 1, corresponds to the portion of the roof rail 120 at which bending moment is maximal. As a result, this allows appropriately increasing the strength against the bending moment that is inputted to the roof rail 120 from the center pillar 13 during a side collision, and allows the roof rail 120 to take the bending moment, in a state where buckling is yet unlikelier to occur.

In the roof rail 120, thus, the portion at which the curvature of the ridgeline 124 of the outer reinforcement 121 is maximal corresponds to the position at which the bending moment of the roof rail 120 is maximal. This allows increasing more reliably the strength at portions that must have substantial strength since the bending moment is greatest there. Therefore, desired strength toward inputted loads can be secured by simply imparting curvature through curving of the outer reinforcement 121, without providing any new reinforcement member in the roof rail 120. The strength of the roof rail 120 can be enhanced as a result without an increase in reinforcement members.

The maximal curvature portion of the ridgeline 124 of the outer reinforcement 121 is positioned at the.joint of the center pillar 13 and the roof rail 120. Therefore, the roof rail 120 can take large loads that are inputted to the roof rail 120 from the center pillar 13. As a result, the center pillar 13 can be supported while deformation of the roof rail 120 is suppressed, even when a large load, derived for instance from a side collision, is inputted to the center pillar 13. The strength of vehicle 1 as a whole can be enhanced as a result without an increase in reinforcement members.

In the above-described Embodiments and explanatory **examples,** the center pillar 13, 30, the bumper reinforcement 40, 50, the rocker rail 60, 80, 90, the kick-up section 100 and the roof rail 120 have been explained as instances of the vehicle body member according to the invention. However, the vehicle body member according to the invention may be a combination of the above-described embodiments, and may incorporate features other than those of the above-described embodiments. So long as the curvature of a portion corresponding to a portion at which bending moment is maximal is formed to a greater curvature than curvatures of other portions, the form and use of the vehicle body member according to the invention is not limited to the configurations in the above embodiments.

Thus, the vehicle body member according to the invention is useful as a member employed for securing the strength of a vehicle body, and is particularly suitable for securing strength until buckling of the member.

## Claims

1. A vehicle body member being a member that makes up a vehicle body, wherein
in a ridgeline extending in a longitudinal direction of the body member, a curvature of a part of the ridgeline corresponding to a portion at which a bending moment due to a load acting on the body is maximal is greater than curvatures of parts of the ridgeline corresponding to other portions, **characterized in that**
a portion (Cmax) of maximal curvature of a ridgeline (43) extending in a longitudinal direction, in a bumper (6) of the vehicle, is a portion at which the bending moment of the bumper (6) on account of an offset collision is maximal.

2. The body member (40) according to claim 1, comprising:
an outer panel (7); and
a reinforcement member (40),
wherein at least a portion at which the curvature of the ridgeline (43) of the reinforcement member (40) is maximal is a portion at which the bending moment is maximal.

3. The body member according to claim 1, wherein the portion of maximal curvature of the ridgeline (43) in the bumper (6) is positioned at two sites spaced from a center of the vehicle (1) in a width direction.

## Patentansprüche

1. Fahrzeugkörperbauteil, das ein Bauteil ist, das einen Fahrzeugkörper bildet, wobei
in einer Kammlinie, die sich in einer Längsrichtung des Körperbauteils erstreckt, eine Krümmung eines Teils der Kammlinie, der einem Abschnitt entspricht, an dem ein Biegemoment infolge einer an dem Körper wirkenden Last maximal ist, größer als Krümmungen von Teilen der Kammlinie ist, die den anderen Abschnitten entsprechen, **dadurch gekennzeichnet, dass**
ein Abschnitt (Cmax) einer maximalen Krümmung einer Kammlinie (43), die sich in einer Längsrichtung erstreckt, in einem Stoßfänger (6) des Fahrzeugs, ein Abschnitt ist, an dem das Biegemoment des Stoßfängers (6) wegen eines versetzten Aufpralls maximal ist.

2. Körperbauteil (40) gemäß Anspruch 1, mit:
einem Außenblech (7); und
einem Verstärkungselement (40),
wobei zumindest ein Abschnitt, an dem die Krümmung der Kammlinie (43) des Verstärkungselements (40) maximal ist, ein Abschnitt ist, an dem das Biegemoment maximal ist.

3. Körperbauteil gemäß Anspruch 1, wobei der Abschnitt der maximalen Krümmung der Kammlinie (43) in dem Stoßfänger (6) an zwei Stellen positioniert ist, die von einer Mitte des Fahrzeugs (1) in einer Breitenrichtung beabstandet sind.

## Revendications

1. Elément de carrosserie de véhicule qui est un élément qui constitue une carrosserie de véhicule, dans lequel
dans une ligne de crête s'étendant dans une direction longitudinale de l'élément de carrosserie, une courbure d'une partie de la ligne de crête correspondant à une partie au niveau de laquelle un moment de flexion dû à une charge agissant sur la carrosserie est maximal est plus grande que des courbures de parties de la ligne de crête correspondant à d'autres parties, **caractérisé en ce que**
une partie (Cmax) de courbure maximale d'une ligne de crête (43) s'étendant dans une direction longitudinale, dans un pare-chocs (6) du véhicule, est une partie au niveau de laquelle le moment de flexion du pare-chocs (6) dans le cas d'une collision décalée est maximal.

2. Elément de carrosserie (40) selon la revendication 1, comportant .
un panneau extérieur (7) ; et
un élément de renfort (40),
dans lequel au moins une partie au niveau de laquelle la courbure de la ligne de crête (43) de l'élément de renfort (40) est maximale est une partie au niveau de laquelle le moment de flexion est maximal.

3. Elément de carrosserie selon la revendication 1, dans lequel la partie de courbure maximale de la ligne de crête (43) dans le pare-chocs (6) est positionnée dans deux emplacements éloignés d'un centre du véhicule (1) dans une direction de largeur.
